# EUROPEAN PATENT APPLICATION

(11) **EP 3 070 460 A1**
(43) Date of publication of application: **21.09.2016**
(21) Application number: 14861853.1
(22) Date of filing: 30.10.2014
(51) Int. Cl.: G01N 23/04, B09B 5/00, C22B 7/00, G06T 1/00, C22B 11/00, C22B 23/00

(54) **DATA STRUCTURE, LIBRARY CREATION DEVICE, ELECTRONIC DEVICE ANALYSIS DEVICE, AND LIBRARY PROVISION SYSTEM**

(30) Priority: 14.11.2013 JP 2013236109
(71) Applicant: Omron Corporation, Kyoto-shi, Kyoto 600-8530 (JP)
(72) Inventor: HISANO Atsushi, Kyoto-shi Kyoto 600-8530 (JP); ONISHI Takako, Kyoto-shi Kyoto 600-8530 (JP); SUGITA Shinji, Kyoto-shi Kyoto 600-8530 (JP)
(74) Representative: Kilian Kilian & Partner
(86) International application number: PCT/JP2014/078896
(87) International publication number: WO 2015/072338

(57) **Abstract**

A useful body library having a data structure is prepared. In the data structure, characteristic data expressing a characteristic of a useful body used in object recognition with a computer and containing substance data expressing a kind and a content of a recyclable specified substance contained in the useful body are associated with each other in each kind of the useful body with respect to the useful body, the useful body being a constituent component of an electronic device and an electronic device, the electronic device and the electronic device containing the specified substance. An electronic device analysis device specifies which one of useful bodies an analysis object corresponds to by comparing information acquired from the analysis object with characteristic data of each useful body in the useful body library, and decides the kind and content of the specified substance contained in the analysis object by acquiring the containing substance data of the corresponding useful body from the useful body library.

## Description

### TECHNICAL FIELD

The present invention relates to a technology that is effective in recycling a useful substance contained in an electronic device.

### BACKGROUND ART

An attempt to recover and reuse useful resources such as noble metals and rare metals from a waste electronic device is going on. From the viewpoint of national security, there is a big challenge to ensure a scare resource including rare metals.

For example, Patent Literatures 1 to 3 disclose technologies of recycling the electronic device. However, in the disclosed technologies, the useful resource is extracted for the purpose of the recycling by a physical or chemical treatment, after products are crushed or powdered or after a mixture is prepared. In the technologies, cost increases to recycle the useful resource, and it is difficult that a recovery cost of the useful resource is lower than a selling price of the extracted useful resource.

Patent Literatures 4 and 5 propose methods for detecting a position of the extraction object component to cut and extract the component from a product. In the method of Patent Literature 4, with respect to an HDD (Hard Disk Device) in which a structure is standardized, the component containing a scarce resource is selectively cut using structure information. In the method of Patent Literature 5, a transmission image of an object product is formed using an X-ray, a position of a motor is measured from the transmission image, a proper cutting position is decided, and the object product is cut to take out the motor. However, because of low versatility, it is difficult for the methods of Patent Literatures 4 and 5 to provide a proper treatment corresponding to a product type or a product specification to various products appearing on a market.

### CITATION LIST

### PATENT LITERATURE

Patent Literature 1: Japanese Unexamined Patent Publication No. 2013-685
Patent Literature 2: Japanese Unexamined Patent Publication No. 2012-21218
Patent Literature 3: Japanese Unexamined Patent Publication No. 2012-174770
Patent Literature 4: Japanese Unexamined Patent Publication No. 2012-41575
Patent Literature 5: Japanese Unexamined Patent Publication No. 2000-197870

### SUMMARY OF THE INVENTION

### PROBLEMS TO BE SOLVED BY THE INVENTION

Unless prices of useful resources taken out from electronic devices such as a mobile phone and a computer are higher than the recovery cost, a recycling business cannot be established. In order to reduce the recovery cost, it is necessary to understand a kind or a content of the useful resource contained in the electronic device or a component mounting board and where the useful resource is contained in the electronic device or component mounting board before a recovery process. When the pieces of information are previously obtained, the electronic device or the component mounting board can be cut and sorted, the recovery process can be decided, or whether the electronic device or the component mounting board is sent to the recovery process or disposed (because it is too costly) can be determined, and therefore the recovery cost can be reduced as much as possible.

Because the electronic device is originally designed by CAD, the kind and position of the component mounted on the electronic device are easily understood using the design data. Therefore, the kind or content of the useful resource recyclable from the component can be recognized. However, a manufacturer rarely discloses design data because the design data of the electronic device includes many pieces of confidential information of the manufacturer. Resultantly, a system that detects the kind or content of the useful resource in the electronic device using the design data is lack in feasibility.

An object of the present invention is to provide a technology that is effective in recycling the specified substance by detecting the kind or content of the recyclable specified substance contained in the electronic device or the constituent component of the electronic device using a simple method.

### MEANS FOR SOLVING THE PROBLEM

According to a first aspect, in a data structure, characteristic data expressing a characteristic of a useful body used in object recognition with a computer and containing substance data expressing a kind and a content of a recyclable specified substance contained in the useful body are associated with each other in each kind of the useful body with respect to the useful body, the useful body being a constituent component of an electronic device and an electronic device, the electronic device and the electronic device containing the specified substance.

For example, when the used electronic device or the constituent component of the used electronic device is provided, the use of the library (also referred to as a "useful body library") having the data structure of the first aspect can specify the kind of the electronic device or the constituent component of the electronic device by object recognition with a computer (that is, identify which one of the useful bodies the electronic device or the constituent component corresponds to). Additionally, how much the electronic device or the constituent component of the electronic device contains the recyclable specified substance can easily be determined based on a recognition result. Accordingly, the efficiency of the treatment to recover the specified substance from the electronic device or the constituent component of the electronic device can be achieved by information processing using the useful body library.

The constituent component of the electronic device means an article that can be separated or taken apart from the electronic device. For example, the component mounting board incorporated in the electronic device or the electronic component mounted on the component mounting board corresponds to the constituent component of the electronic device. Examples of the useful body library include a useful body library (also referred to as a "component library") in which the characteristic data of the electronic component and the containing substance data are associated with each other in each kind of the electronic component, a useful body library (also referred to as a "board library") in which the characteristic data of the component mounting board and the containing substance data of the board are associated with each other in each kind of the component mounting board, and a useful body library (also referred to as an "electronic device library") in which the characteristic data of the electronic device and the containing substance data of electronic device are associated with each other in each kind of the electronic device. The containing substance data of the board may include data of the kind and content of the containing substance of individual component mounted on the board or data of a total content of the containing substances of all the components mounted on the board. The same holds true for the containing substance data of the electronic device. Plural kinds of libraries may be stored in a storage device, or the data of the electronic device, the data of the component mounting board, and the data of the electronic component may be mixed in the identical library.

According to a second aspect, in the data structure, the characteristic data includes image data of the useful body and/or data expressing the characteristic extracted from the image data of the useful body.

In the configuration of the second aspect, when the image data of the useful body or the data expressing the characteristic of the image is registered in the useful body library as the characteristic data, the data structure is easily applied to the image recognition processing in which the image of the electronic device or the constituent component of the electronic device is used.

According to a third aspect, in the data structure, the image data is X-ray image data.

In the configuration of the third aspect, when the X-ray image data and/or the data extracted from the X-ray image data is used, the component that is not visibly recognized from the appearance because of the location of the component inside the electronic device can be recognized, and the data structure can be applied to various objects.

A fourth aspect provides a library creation device that produces a useful body library having the data structure according to any one of the first to third aspects, the library creation device including: a measurement unit configured to measure a registration object; and an information processor configured to produce characteristic data for identifying the registration object based on measured data obtained with the measurement unit, and register the produced characteristic data in the useful body library together with containing substance data of the registration object, the containing substance data of the registration object being provided by a user.

The characteristic data and containing substance data, which are registered in the useful body library, can easily be produced in the configuration of the fourth aspect.

A fifth aspect provides a library creation method for producing a useful body library having the data structure according to any one of the first to third aspects, the library creation method including the steps of: measuring a registration object with a measurement unit; producing characteristic data for identifying the registration object using an information processor based on measured data obtained with the measurement unit; and registering the produced characteristic data in the useful body library together with containing substance data of the registration object, the containing substance data of the registration object being provided by a user.

The characteristic data and containing substance data, which are registered in the useful body library, can easily be produced in the configuration of the fifth aspect.

According to a sixth aspect, an electronic device analysis device includes: a storage device in which a useful body library having the data structure according to any one of claims 1 to 3 is stored; a recognizer configured to specify which useful body corresponds to an analysis object by comparing information obtained from the analysis object with characteristic data of each useful body in the useful body library stored in the storage device; and a containing substance decision unit configured to decide a kind and a content of a specified substance contained in the analysis object by acquiring containing substance data of the corresponding useful body from the useful body library based on a recognition result of the recognizer.

In the configuration of the sixth aspect, the treatment to recover and recycle the recyclable specified substance can efficiently be performed because whether a certain content of the specified substance is contained in the electronic device or the constituent component of the electronic device can automatically be determined.

A seventh aspect provides an electronic device analysis device connectable to a system including a storage device in which a useful body library having the data structure according to any one of the first to third aspects is stored, the electronic device analysis device including: a recognizer configured to specify which useful body corresponds to an analysis object by comparing information obtained from the analysis object with characteristic data of each useful body in the useful body library acquired from the system; and a containing substance decision unit configured to decide a kind and a content of a specified substance contained in the analysis object by acquiring containing substance data of the corresponding useful body from the useful body library based on a recognition result of the recognizer.

In the configuration of the seventh aspect, the treatment to recover and recycle the recyclable specified substance can efficiently be performed because whether a certain content of the specified substance is contained in the electronic device or the constituent component of the electronic device can automatically be determined.

According an eighth aspect, a library provision system includes: a storage device in which a useful body library having the data structure according to any one of the first to third aspects is stored; and a data provision unit configured to provide data of the useful body library stored in the storage device to the electronic device analysis device through a network in response to a request from an electronic device analysis device connected through the network.

For example, the use of the library provision system of the eighth aspect can easily provide a useful body library provision service by a cloud. For a user of the library provision system of the electronic device analysis device, because the useful body library can be used on line, a storage capacity on the electronic device analysis device side can be decreased, and the latest library can always be used (even if the user does not update the data of the useful body library).

According to a ninth aspect, an electronic device analysis device includes: a storage device in which a component library is stored, the component library having a data structure in which component characteristic data expressing a characteristic of an electronic component and containing substance data expressing a kind and a content of a specified substance contained in the electronic component are associated with each other in each kind of the electronic component; an imaging unit configured to acquire image data by photographing an object board that is of a component mounting board for an analysis object; a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and a containing substance decision unit configured to decide the kind and the content of the specified substance contained in the object board from a recognition result of the component recognizer and the containing substance data of each electronic component, the containing substance data of each electronic component being stored in the component library.

In the electronic device analysis device of the ninth aspect, the treatment to recover and recycle the specified substance can efficiently be performed because whether specified substances such as noble metals and rare metals are contained in the electronic device or the component mounting board can automatically be determined.

According to tenth aspect, an electronic device analysis device includes: a storage device in which a board library is stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board; an imaging unit configured to acquire image data by photographing an object board that is of the component mounting board for an analysis object; a board recognizer configured to specify a kind of the object board by comparing a characteristic of the image data of the object board with the board characteristic data of each electronic component, the image data of the object board being acquired with the imaging unit, the board characteristic data of each electronic component being stored in the board library; and a containing substance decision unit configured to decide the kind and the content of the specified substance contained in the object board by acquiring the mounting component data of the corresponding component mounting board from the board library based on a recognition result of the component recognizer.

In the electronic device analysis device of the tenth aspect, the treatment to recover and recycle the specified substance can efficiently be performed because whether specified substances such as noble metals and rare metals are contained in the electronic device or the component mounting board can automatically be determined. Additionally, the simplification and speed enhancement of the processing can be expected by adopting the board recognition method, and the accurate information about the containing substance of each component on the board can be acquired from the board library.

According to an eleventh aspect, an electronic device analysis device includes: a storage device in which a board library and a component library are stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component; an imaging unit configured to acquire image data by photographing an object board that is of the component mounting board for an analysis object; a board recognizer configured to specify a kind of the object board by comparing a characteristic of the image data of the object board with the board characteristic data of each electronic component, the image data of the object board being acquired with the imaging unit, the board characteristic data of each electronic component being stored in the board library; a component recognizer configured to compare a characteristic of the image data of the object board with the component characteristic data of each electronic component when the board recognizer fails to recognize the object board, the image data of the object board being acquired with the imaging unit, the component characteristic data of each electronic component being stored in the component library, and specify the kind of the object board by specifying the kind of the electronic component mounted on the object board; and a containing substance decision unit configured to decide the kind and the content of the specified substance contained in the object board by acquiring the mounting component data of the corresponding component mounting board from the board library based on a recognition result of one of the board recognizer and the component recognizer.

In the electronic device analysis device of the eleventh aspect, the treatment to recover and recycle the specified substance can efficiently be performed because whether specified substances such as noble metals and rare metals are contained in the electronic device or the component mounting board can automatically be determined. Additionally, the board recognition of the relatively light processing is initially performed, and the component recognition is auxiliarily performed in the case that the recognition is hardly performed in units of boards, so that the processing efficiency can be improved as a whole while the board recognition rate can be improved.

According to a twelfth aspect, an electronic device analysis device includes: a storage device in which a component library and a board library are stored, the component library having a data structure in which component characteristic data expressing a characteristic of an electronic component and containing substance data expressing a kind and a content of a specified substance contained in the electronic component are associated with each other in each kind of the electronic component, the board library having a data structure in which board characteristic data expressing a characteristic of a component mounting board, the electronic component mounted on the component mounting board, and mounting component data expressing a kind and a content of the specified substance contained in the electronic component are associated with one another in each kind of the component mounting board; an imaging unit configured to acquire image data by photographing an object board that is of the component mounting board for an analysis object; a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; a board recognizer configured to specify a kind of the object board by comparing a recognition result of the component recognizer with the mounting component data of each component mounting board, the mounting component data of each component mounting board being stored in the board library; and a containing substance decision unit configured to decide the kind and the content of the specified substance contained in the object board by acquiring the mounting component data of the corresponding component mounting board from the board library based on a recognition result of the board recognizer.

In the electronic device analysis device of the twelfth aspect, the treatment to recover and recycle the specified substance can efficiently be performed because whether specified substances such as noble metals and rare metals are contained in the electronic device or the component mounting board can automatically be determined. The board is specified based on the component recognition result, and the information about each component is acquired from the board library. Therefore, all the components are not necessarily recognized with high accuracy from the image of the analysis object, and the simplification and speed enhancement of the processing can be achieved. Additionally, the information about the containing substance of each component on the board can correctly be acquired.

According to a thirteenth aspect, an electronic device analysis device includes: a storage device in which a board library and a component library are stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component; an imaging unit configured to acquire image data by photographing an object board that is of the component mounting board for an analysis object; a pre-sensing unit configured to acquire sensing data of the object board by measuring the object board in a manner simpler than that of the imaging unit; a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library; a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and a containing substance decision unit configured to decide the kind and the content of the specified substance contained in the object board by acquiring the mounting component data of the corresponding component mounting board from the board library based on a recognition result of the board recognizer, or by acquiring containing substance data of the corresponding component to be mounted from the component library based on a recognition result of the component recognizer. At this point, whether the imaging unit needs to photograph the object board is determined according to the recognition result of the object board with the board recognizer.

In the electronic device analysis device of the thirteenth aspect, the treatment to recover and recycle the specified substance can efficiently be performed because whether specified substances such as noble metals and rare metals are contained in the electronic device or the component mounting board can automatically be determined. The photographing with the imaging unit and the necessity of the component recognition are determined according to a pre-sensing result, so that the processing efficiency can be improved as a whole.

According to a fourteenth aspect, an electronic device analysis device includes: a storage device in which a board library and a component library are stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component; an imaging unit configured to acquire image data by photographing an object board that is of the component mounting board for an analysis object; a pre-sensing unit configured to acquire sensing data of the object board by measuring the object board in a manner simpler than that of the imaging unit; a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library; a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and a containing substance decision unit configured to decide the kind and the content of the specified substance contained in the object board by acquiring the mounting component data of the corresponding component mounting board from the board library based on a recognition result of the board recognizer, or by acquiring containing substance data of the corresponding component to be mounted from the component library based on a recognition result of the component recognizer. At this point, a photographing condition of the object board with the imaging unit is decided based on the pre-sensing data.

In the electronic device analysis device of the fourteenth aspect, the treatment to recover and recycle the specified substance can efficiently be performed because whether specified substances such as noble metals and rare metals are contained in the electronic device or the component mounting board can automatically be determined. The photographing condition of the imaging unit is adjusted according to the pre-sensing result, so that the photographing optimum for the component recognition can be performed to improve the recognition rate or the processing efficiency.

A fifteenth aspect provides an electronic device analysis device connectable to a system through a network, a component library being stored in the system, the component library having a data structure in which component characteristic data expressing a characteristic of an electronic component and containing substance data expressing a kind and a content of a specified substance contained in the electronic component are associated with each other in each kind of the electronic component, the electronic device analysis device including: an imaging unit configured to acquire image data by photographing an object board that is of a component mounting board for an analysis object; a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and a containing substance decision unit configured to decide the kind and the content of the specified substance contained in the object board from a recognition result of the component recognizer and the containing substance data of each electronic component, the containing substance data of each electronic component being stored in the component library.

In the electronic device analysis device of the fifteenth aspect, the treatment to recover and recycle the specified substance can efficiently be performed because whether specified substances such as noble metals and rare metals are contained in the electronic device or the component mounting board can automatically be determined.

A sixteenth aspect provides an electronic device analysis device connectable to a system through a network, a board library being stored in the system, the component library having a data structure in which component characteristic data expressing a characteristic of an electronic component and containing substance data expressing a kind and a content of a specified substance contained in the electronic component are associated with each other in each kind of the electronic component, the electronic device analysis device including: an imaging unit configured to acquire image data by photographing an object board that is of the component mounting board for an analysis object; a board recognizer configured to specify a kind of the object board by comparing a characteristic of the image data of the object board with the board characteristic data of each electronic component, the image data of the object board being acquired with the imaging unit, the board characteristic data of each electronic component being stored in the board library; and a containing substance decision unit configured to decide the kind and the content of the specified substance contained in the object board by acquiring mounting component data of the corresponding component mounting board from the board library based on a recognition result of the component recognizer.

In the electronic device analysis device of the sixteenth aspect, the treatment to recover and recycle the specified substance can efficiently be performed because whether specified substances such as noble metals and rare metals are contained in the electronic device or the component mounting board can automatically be determined. Additionally, the simplification and speed enhancement of the processing can be expected by adopting the board recognition method, and the accurate information about the containing substance of each component on the board can be acquired from the board library.

A seventeenth aspect provides an electronic device analysis device connectable to a system through a network, a board library and a component library being stored in the system, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component, the electronic device analysis device including: an imaging unit configured to acquire image data by photographing an object board that is of the component mounting board for an analysis object; a board recognizer configured to specify a kind of the object board by comparing a characteristic of the image data of the object board with the board characteristic data of each electronic component, the image data of the object board being acquired with the imaging unit, the board characteristic data of each electronic component being stored in the board library; a component recognizer configured to compare a characteristic of the image data of the object board with the component characteristic data of each electronic component when the board recognizer fails to recognize the object board, the image data of the object board being acquired with the imaging unit, the component characteristic data of each electronic component being stored in the component library, and specify the kind of the object board by specifying the kind of the electronic component mounted on the object board; and a containing substance decision unit configured to decide the kind and the content of the specified substance contained in the object board by acquiring the mounting component data of the corresponding component mounting board from the board library based on a recognition result of one of the board recognizer and the component recognizer.

In the electronic device analysis device of the seventeenth aspect, the treatment to recover and recycle the specified substance can efficiently be performed because whether specified substances such as noble metals and rare metals are contained in the electronic device or the component mounting board can automatically be determined. Additionally, the board recognition of the relatively light processing is initially performed, and the component recognition is auxiliarily performed in the case that the recognition is hardly performed in units of boards, so that the processing efficiency can be improved as a whole while the board recognition rate can be improved.

An eighteenth aspect provides an electronic device analysis device connectable to a system through a network, a component library and a board library being stored in the system, the component library having a data structure in which component characteristic data expressing a characteristic of an electronic component and containing substance data expressing a kind and a content of a specified substance contained in the electronic component are associated with each other in each kind of the electronic component, the board library having a data structure in which board characteristic data expressing a characteristic of a component mounting board, the electronic component mounted on the component mounting board, and mounting component data expressing a kind and a content of the specified substance contained in the electronic component are associated with one another in each kind of the component mounting board, the electronic device analysis device including: an imaging unit configured to acquire image data by photographing an object board that is of the component mounting board for an analysis object; a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; a board recognizer configured to specify a kind of the object board by comparing a recognition result of the component recognizer with the mounting component data of each component mounting board, the mounting component data of each component mounting board being stored in the board library; and a containing substance decision unit configured to decide the kind and the content of the specified substance contained in the object board by acquiring the mounting component data of the corresponding component mounting board from the board library based on a recognition result of the board recognizer.

In the electronic device analysis device of the eighteenth aspect, the treatment to recover and recycle the specified substance can efficiently be performed because whether specified substances such as noble metals and rare metals are contained in the electronic device or the component mounting board can automatically be determined. The board is specified based on the component recognition result, and the information about each component is acquired from the board library. Therefore, all the components are not necessarily recognized with high accuracy from the image of the analysis object, and the simplification and speed enhancement of the processing can be achieved. Additionally, the information about the containing substance of each component on the board can correctly be acquired.

A nineteenth aspect provides an electronic device analysis device connectable to a system through a network, a board library and a component library being stored in the system, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component, the electronic device analysis device including: an imaging unit configured to acquire image data by photographing an object board that is of the component mounting board for an analysis object; a pre-sensing unit configured to acquire sensing data of the object board by measuring the object board in a manner simpler than that of the imaging unit; a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library; a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and a containing substance decision unit configured to decide the kind and the content of the specified substance contained in the object board by acquiring the mounting component data of the corresponding component mounting board from the board library based on a recognition result of the board recognizer, or by acquiring containing substance data of the corresponding component to be mounted from the component library based on a recognition result of the component recognizer. At this point, whether the imaging unit needs to photograph the object board is determined according to the recognition result of the object board with the board recognizer.

In the electronic device analysis device of the nineteenth aspect, the treatment to recover and recycle the specified substance can efficiently be performed because whether specified substances such as noble metals and rare metals are contained in the electronic device or the component mounting board can automatically be determined. The photographing with the imaging unit and the necessity of the component recognition are determined according to a pre-sensing result, so that the processing efficiency can be improved as a whole.

A twentieth aspect provides an electronic device analysis device connectable to a system through a network, a board library and a component library being stored in the system, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component, the electronic device analysis device including: an imaging unit configured to acquire image data by photographing an object board that is of the component mounting board for an analysis object; a pre-sensing unit configured to acquire sensing data of the object board by measuring the object board in a manner simpler than that of the imaging unit; a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library; a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and a containing substance decision unit configured to decide the kind and the content of the specified substance contained in the object board by acquiring the mounting component data of the corresponding component mounting board from the board library based on a recognition result of the board recognizer, or by acquiring containing substance data of the corresponding component to be mounted from the component library based on a recognition result of the component recognizer. At this point, a photographing condition of the object board with the imaging unit is decided based on the pre-sensing data.

In the electronic device analysis device of the twentieth aspect, the treatment to recover and recycle the specified substance can efficiently be performed because whether specified substances such as noble metals and rare metals are contained in the electronic device or the component mounting board can automatically be determined. The photographing condition of the imaging unit is adjusted according to the pre-sensing result, so that the photographing optimum for the component recognition can be performed to improve the recognition rate or the processing efficiency.

According to a twenty-first aspect, in the electronic device analysis device according to any one of the ninth to twentieth aspects, the imaging unit is an X-ray imaging apparatus that acquires an X-ray image of the object board.

In the electronic device analysis device of the twenty-first aspect, the use of the X-ray image can recognize the components, such as the component existing in the electronic device, the component of a multilayer board, and the component mounted on the back side of the board, which are invisible from the appearance, and the analysis device of the first embodiment can be used in various objects.

According to a twenty-second aspect, in the electronic device analysis device according to any one of the ninth to twentieth aspect, the containing substance decision unit outputs data including information about the kind and the content of the specified substance contained in the object board and position information about the component on the board, the component containing the specified substance.

In the electronic device analysis device of the twenty-second aspect, the improvement of recovery work efficiency and the reduction of recovery cost can be expected by using the data in the subsequent recovery process.

According to a twenty-third aspect, the electronic device analysis device according to the twenty-second aspect further includes a specified substance extraction method decision unit configured to produce data in which a method for extracting the specified substance from the object board is defined based on the data including the information about the kind and the content of the specified substance contained in the object board and the position information about the component on the board, the component containing the specified substance, the data being output from the containing substance decision unit.

In the electronic device analysis device of the twenty-third aspect, the improvement of recovery work efficiency and the reduction of recovery cost can be expected by using the data in the subsequent recovery process.

According to a twenty-fourth aspect, the electronic device analysis device according to any one of the tenth to fourteenth and sixteenth to twentieth aspects further includes a specified substance extraction method decision unit configured to acquire extraction method definition data for the component mounting board based on the recognition result of the board recognizer from a specified substance information library having a data structure in which the extraction method definition data is associated in each kind of the component mounting board, a method for extracting the specified substance from the component mounting board being defined in extraction method definition data.

In the electronic device analysis device of the twenty-fourth aspect, the improvement of recovery work efficiency and the reduction of recovery cost can be expected by using the data in the subsequent recovery process.

### EFFECT OF THE INVENTION

Accordingly, in the present invention, the kind or content of the specified substance contained in the electronic device or component mounting board can be detected by the simple method, and the specified substance can efficiently be recovered.

### BRIEF DESCRIPTION OF THE DRAWINGS

Fig. 1 is a view schematically illustrating a configuration of an electronic device analysis device.
Fig. 2 is a block diagram illustrating a main functional configuration of the analysis device according to a first embodiment.
Fig. 3 is a flowchart illustrating a flow of analysis processing performed with the analysis device of the first embodiment.
Figs. 4(a) to 4(f) are views illustrating component recognition using a solder characteristic.
Figs. 5(a) to 5(d) illustrate examples of a containing substance list.
Fig. 6 is a block diagram illustrating a main functional configuration of an analysis device according to a second embodiment.
Fig. 7 is a flowchart illustrating a flow of analysis processing performed with the analysis device of the second embodiment.
Fig. 8 is a block diagram illustrating a main functional configuration of an analysis device according to a third embodiment.
Fig. 9 is a flowchart illustrating a flow of analysis processing performed with the analysis device of the third embodiment.
Fig. 10 is a block diagram illustrating a main functional configuration of an analysis device according to a fourth embodiment.
Fig. 11 is a flowchart illustrating a flow of analysis processing performed with the analysis device of the fourth embodiment.
Fig. 12 is a view illustrating a library creation device according to a fifth embodiment.
Fig. 13 is a view schematically illustrating a configuration of an electronic device analysis device according to a sixth embodiment.
Fig. 14 is a flowchart illustrating a flow of analysis processing performed with the analysis device of the sixth embodiment.
Fig. 15 is a view illustrating a specified substance extraction method decision function included in an analysis device according to a seventh embodiment.
Fig. 16 is a view illustrating another configuration of the specified substance extraction method decision function included in the analysis device of the seventh embodiment.
Fig. 17(a) is a view illustrating an example of a data structure of a component library, and Fig. 17(b) is a view illustrating an example of a data structure of a board library.
Fig. 18 is a view illustrating a configuration example of a cloud service of a library.

### MODE FOR CARRYING OUT THE INVENTION

### <FIRST EMBODIMENT>

### (Configuration of analysis device)

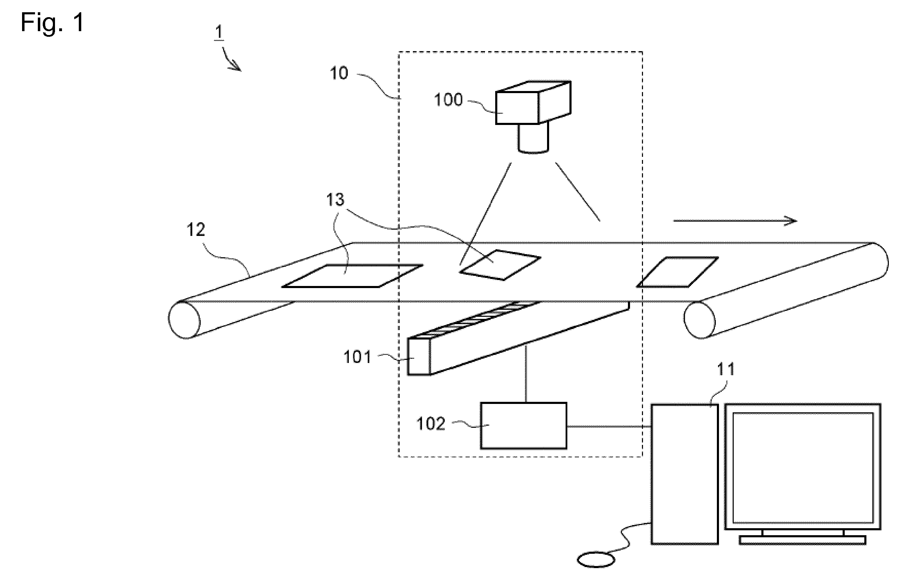

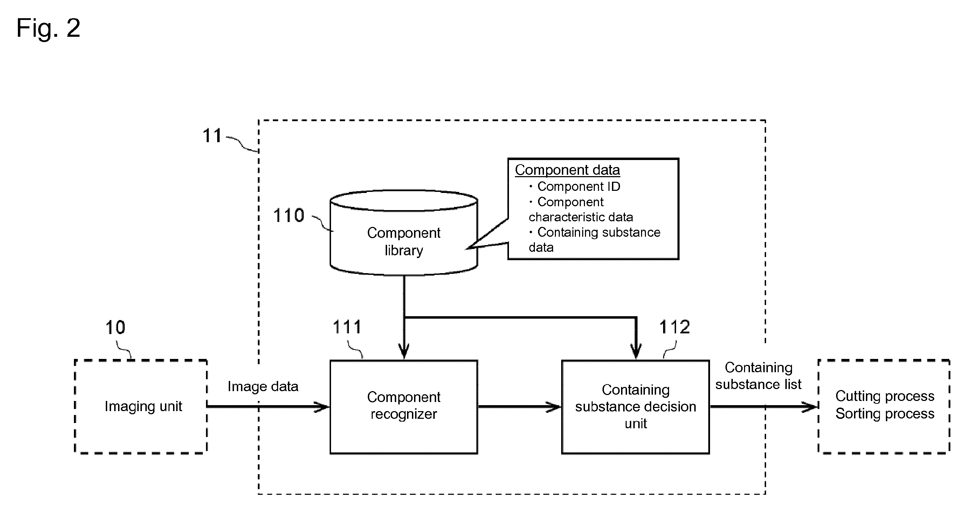

A configuration of an electronic device analysis device according to a first embodiment of the present invention will be described with reference to Figs. 1 and 2. Fig. 1 is a view schematically illustrating an appearance and an operation state of the electronic device analysis device (also referred to as an "analysis device"), and Fig. 2 is a functional block diagram illustrating a main functional configuration of the analysis device.

As illustrated in Fig. 1, an analysis device 1 roughly includes an imaging unit 10 and an information processor 11. The imaging unit 10 photographs an analysis object 13 (such as an electronic device and a component mounting board) conveyed by a conveying device 12 such as a belt conveyer, and outputs image data of the analysis object 13 to the information processor 11. The information processor 11 recognizes (specifies) a mounting component or a board from the image data of the analysis object 13 input from the imaging unit 10, and estimates a content of a specified substance (for example, useful materials such as noble metals and rare metals) included in analysis object 13 based on a recognition result of the information processor 11.

In the first embodiment, an X-ray imaging unit that photographs a two-dimensional transmission X-ray image is used as the imaging unit 10. Specifically, the imaging unit 10 includes an X-ray generator 100 that irradiates the analysis object 13 with an X-ray, an X-ray detector 101 that detects the X-ray transmitted through the analysis object 13, and an image producer 102. In the first embodiment, using the line-sensor type X-ray detector 101 in which many detection elements are arrayed in a main scan direction, a transmission X-ray amount is continuously detected while the analysis object 13 is conveyed in a sub-scan direction by the conveying device 12, thereby acquiring a two-dimensional X-ray image. The image producer 102 has a function of performing preprocessing (such as correction of density or contrast, noise removal, trimming of a region of the analysis object 13, and rotation of the image) as needed in addition to the production of a two-dimensional image data. The functions of the image producer 102 may be provided in the information processor 11.

The imaging unit 10 is not limited to the configuration in Fig. 1. For example, the X-ray detector 101 in which the detection elements are two-dimensionally arrayed may be used. An X-ray imaging apparatus, such as tomosynthesis and CT (computer tomography), in which an X-ray tomographic image can be acquired may be used (for example, Japanese Patent No. 5263204 discloses the detailed configuration of the X-ray imaging apparatus). A visible-light X-ray imaging apparatus such as a CCD camera, an infrared imaging apparatus, and other sensors may be used together with or instead of the X-ray imaging apparatus.

As illustrated in Fig. 2, the information processor 11 has functions of a component library 110, a component recognizer 111, a containing substance decision unit 112, and the like. Typically the information processor 11 can be constructed with a computer including a CPU (Central Processing Unit), a RAM (Random Access memory), an auxiliary storage device such as a magnetic disk and a semiconductor memory, an input device, a display device, and a communication interface. In this case, the CPU reads and executes a program stored in a storage device such as the auxiliary storage device, thereby implementing each function of the information processor 11. The configuration of the information processor 11 can be constructed with one computer, or implemented by a client-server scheme, grid computing, or cloud computing. Alternatively, all or a part of the functions of the information processor 11 can be implemented by a logic circuit such as an ASIC and an FPGA or an on-board computer.

The component library 110 is a database in which "component data" of information about an electronic component is stored. The pieces of component data of various electronic components are previously registered in the component library 110. The component library 110 may be stored in a local storage such as the auxiliary storage device, stored in a network storage such as a server and a cloud, or dispersed in a plurality of storages.

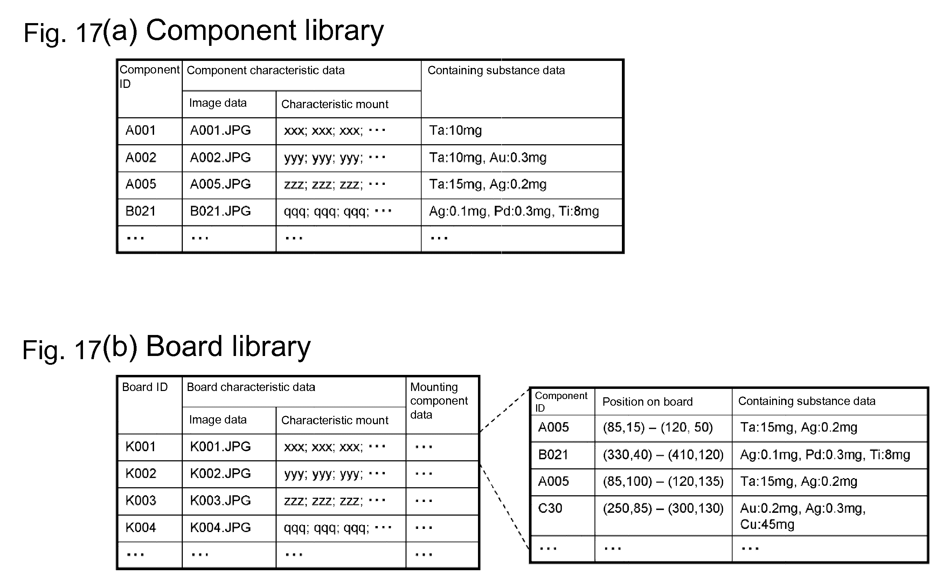

As illustrated in Fig. 17(a), the "component data" includes at least "component ID" "component characteristic data", and "containing substance data". The "component ID" is identification information used to uniquely specify the component. The analysis device 1 or a user may provide the component ID in each component, or a manufacturer or a model number of the component may be used as the component ID. The "component characteristic data" is model data of the component used in image recognition, and any kind of information may be used as the component characteristic data as long as the information expresses the characteristic of the component. For example, the image data of the component or various characteristic amounts extracted from the image data can be used as the component characteristic data. Plural pieces of image data (for example, images, such as an X-ray image and a visible-light image, which are photographed by different imaging schemes, images having different resolutions, and images subjected to different pieces of image processing) or various pieces of component characteristic data may be registered with respect to one component. In the data structure example in Fig. 17(a), JPEG-format image data and data of the characteristic amount extracted from the image data are registered as the component characteristic data. There are various characteristic amounts that can be extracted from the image data. For example, any characteristic amount, such as a size and a shape of the component, a number, a size, a shape, and an arrangement of the solder, the number, size, shape, and arrangement of the electrode, a characteristic of a shade or a texture, and an edge characteristic, which are significant in specifying (identifying) the component by the image recognition. The "containing substance data" is information about a kind and a content of the specified substance contained in the component (or recoverable from the component). Examples of the specified substance include noble metals such as gold, silver, and platinum and rare metals such as palladium and cobalt. The first embodiment may cover substances except for the noble metals or rare metals so long as the substances are a useful material that can be recovered and reused from the component.

The component recognizer 111 has the function of recognizing (specifying) the electronic component mounted on the board from the image data of the board of the analysis object 13 input from the imaging unit 10, and the containing substance decision unit 112 has the function of determining the kind or content of the specified substance contained in the analysis object 13 based on a recognition result of the component recognizer 111. The detained functions will be described below together with an operation flow of the analysis device 1.

### (Operation of analysis device)

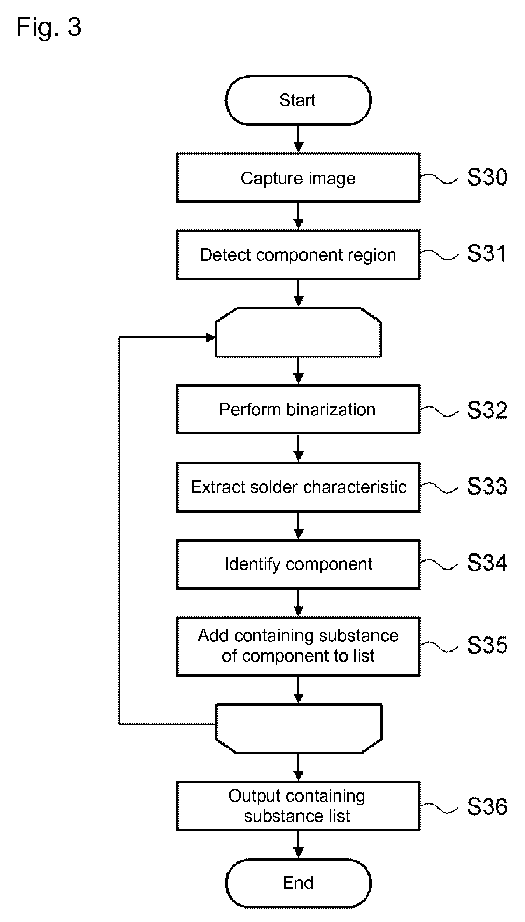

Fig. 3 is a flowchart illustrating a flow of analysis processing performed with the analysis device 1.

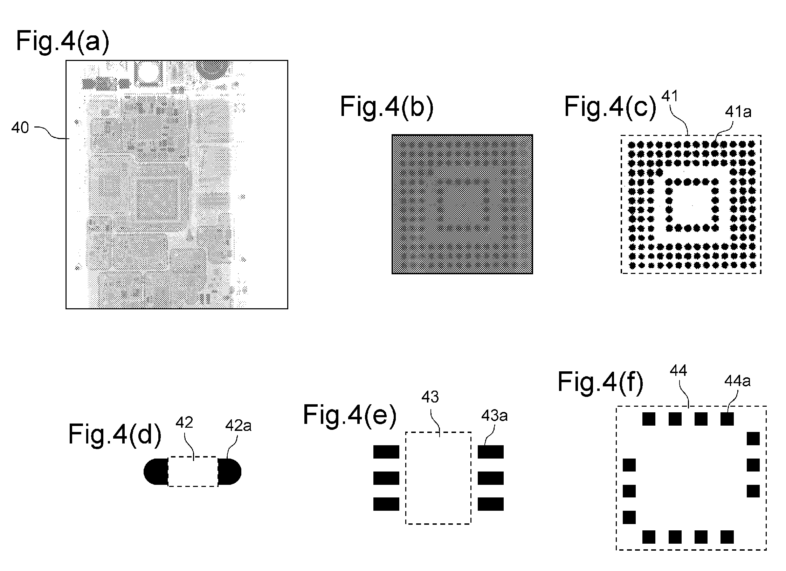

The imaging unit 10 photographs the X-ray image of the component mounting board incorporated in the electronic device of the analysis object 13, and the information processor 11 captures the image data of the component mounting board (Step S30). Fig. 4(a) illustrates an example of a transmission X-ray image 40 of the component mounting board. Because the transmission X-ray amount depends on a material or a thickness of the component on the board, an external form of each component can be observed by the shade of the image, and a metallic portion (such as the solder, lead, and metallic wiring) having high X-ray absorptance can be observed as a clear image.

Then, the component recognizer 111 detects a component region from the image 40 of the whole board (Step S31). Any detection algorithm, such as a method for detecting a region seemed to be the component by pattern matching and a method for extracting a region having equal density (pixel value) by binarization or clustering, may be used. Fig. 4(b) is an enlarged view illustrating an example of a detected component region.

Component recognition processing is performed on each component region detected in Step S31. An algorithm for recognizing the component based on the characteristic of the solder is described by way of example. The component recognizer 111 selects the interesting component region to perform binarization processing (Step S32). Fig. 4(c) illustrates a binarization result of the component region in Fig. 4(b). As described above, the solder portion has the high X-ray absorptance, and appears in the X-ray image as the clear image, so that only the solder portion can easily be extracted by the binarization. The component recognizer 111 extracts the characteristic of the solder from a binary image (Step S33). For example, the number, shape, size (such as an area, a diameter, and a width), and arrangement of the solder may be used as the characteristic of the solder. Although the external form of a component 41 is indicated by a broken line in Fig. 4(c), the broken line is a virtual auxiliary line for convenience, but does not exist in the actual binary image (the same holds true for the broken line in Figs. 4(d) to 4(f)).

The component 41 in Fig. 4(c) is a BGA (Ball Grid Array) package component in which many ball type (circular) solders 41 a are arrayed on a back side of the component with a narrow pitch. Figs. 4(d) to 4(f) illustrate solders of other package type components. In a chip component 42 such as a resistor and a capacitor, semicylindrical type solders 42a exist at both ends. In a lead component 43, relatively narrow solders 43a exist in each lead portion. In an LGA (Land Grid Array) type component 44, many rectangular solders 44a are arrayed on the back side of the component 44. Even in the identical package type component, the number, arrangement, or pitch of the solder is varied depending on the manufacturer or the model number. Therefore, components can be distinguished (specified) by paying attention to the characteristic of the solder obtained from the X-ray image 40. For the component that can not be distinguished only by the characteristic of the solder, the component may be specified in consideration of the characteristic (such as the shape of the component) except for the solder, or the component may be dealt with as the identical component (in the case that no problem is generated even if the content of the specified substance is seemed to be equal).

The component recognizer 111 refers to the component library 110 to compare the solder characteristic of the component characteristic data for each registered component with the solder characteristic extracted from the component region of the X-ray image, and evaluates a similarity (consistency) of the solder characteristic to specify the component (Step S34). Because various techniques generally used in the image recognition can be used with respect to a similarity calculation equation or a similarity evaluation algorithm, the detailed description is omitted. In the case that the component region of the X-ray image is not similar to any registered component in the component library 110 (for example, the registered component in which the similarity exceeds a predetermined threshold does not exist), the following pieces of processing may be skipped with respect to the component region.

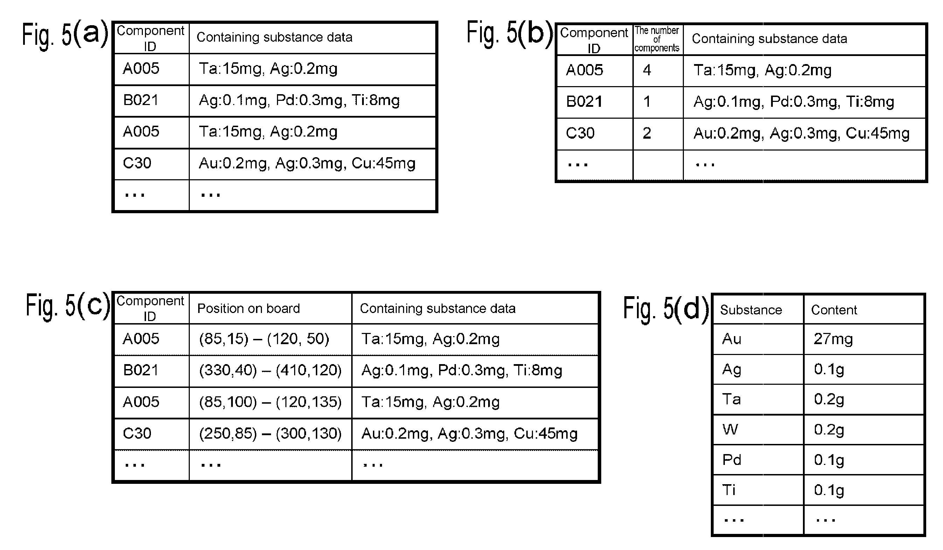

In the case that the component recognizer 111 successfully recognizes the component, the containing substance decision unit 112 reads the component ID and containing substance data of the component from the component library 110, and adds the component ID and the containing substance data to a containing substance list (Step S35). The containing substance list means data in which the kind and content of the (recoverable) specified substance contained in the electronic component mounted on the board are recorded. Fig. 5(a) illustrates an example of the containing substance list. In Fig. 5(a), the component ID and the containing substance data are described in each specified component. The containing substance list is not limited to the form in Fig. 5(a), but any form may be used. For example, the number and containing substance data of the component may be described in each component ID as illustrated in Fig. 5(b), position information (coordinate values of upper-left and lower-right vertices in the component region) about the component on the board may also be described as illustrated in Fig. 5(c), and the content (a cumulative value of all the components) may be described in each kind of the specified substance as illustrated in Fig. 5(d).

After the pieces of processing in Steps S32 to S35 are repeatedly performed on all the components of the analysis objects 13, the containing substance decision unit 112 outputs the containing substance list to end the analysis processing (Step S36).

The produced data of the containing substance list is used in a post-process. For example, delivery of the component to the post-process or disposal of the component can be selected based on existence (or content) of the containing substance, or which recovery process the component is delivered to can be sorted based on the kind of the containing substance. Alternatively, only the necessary component can automatically be taken out from the electronic device or component mounting board by controlling a cutting machine based on the position information about the component containing the specified substance. For the large board having a relatively low degree of integration, efficiency of the recovery treatment can be expected to be largely improved by taking out only the valuable component through such methods.

In the analysis device of the first embodiment, the treatment to recover and recycle the specified substance can efficiently be performed because whether specified substances such as noble metals and rare metals are contained in the electronic device or the component mounting board can automatically be determined. The use of the X-ray image can recognize the components, such as the component existing in the electronic device, the component of a multilayer board, and the component mounted on the back side of the board, which are invisible from the appearance, and the analysis device of the first embodiment can be used in various objects. The characteristic of the solder constituting the clear image of the X-ray image is used in the component recognition, so that sufficient recognition accuracy can be obtained by the relatively easy processing.

In the first embodiment, the component is specified by evaluating the similarity of the solder characteristic. Alternatively, for example, preferably the similarity between the image of the registered component and the image of the component extracted from the analysis object is evaluated by calculating a correlation coefficient or a difference image between the images. In the case that the similarity between the images is evaluated, a processing speed may be enhanced by the use of the low-resolution image or the division of the image into small blocks.

### <SECOND EMBODIMENT>

While each component is recognized in the first embodiment, the board is set to a recognition object in a second embodiment. A configuration unique to the second embodiment will mainly be described below, and the description of the configuration common to the first embodiment is omitted.

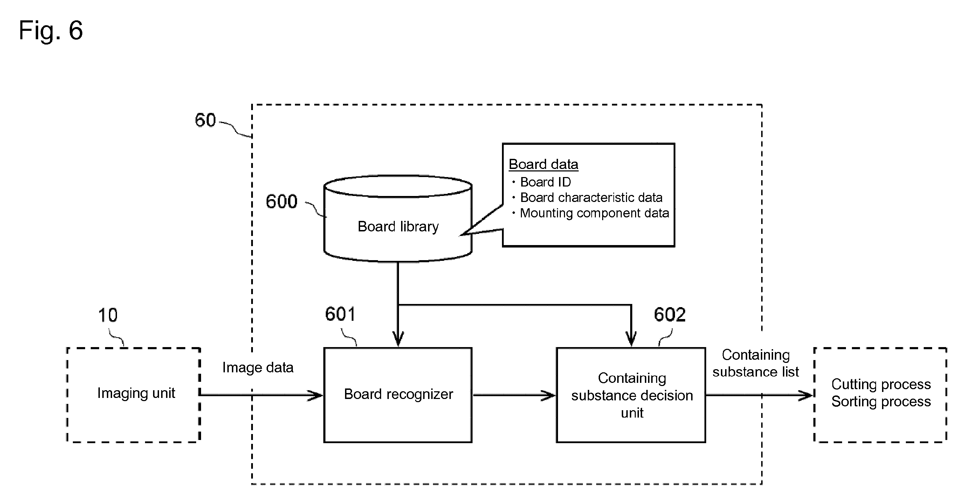

Fig. 6 illustrates a functional configuration of an information processor of the second embodiment. An information processor 60 has functions of a board library 600, a board recognizer 601, a containing substance decision unit 602, and the like. The board library 600 is a database in which "board data" of information about a component mounting board is stored. The pieces of board data of various electronic components are previously registered in the board library 600. The board library 600 may be stored in the local storage similarly to the component library of the first embodiment, stored in the network storage, or dispersed in a plurality of storages.

As illustrated in Fig. 17(b), the "board data" includes "board ID", "board characteristic data" and "mounting component data". The "board ID" is identification information used to uniquely identify the board. The analysis device or the user may provide the board ID in each board, or the manufacturer or the model number of the board may be used as the board ID. The "board characteristic data" is model data of the board used in the image recognition, and any kind of information may be used as the board characteristic data as long as the information expresses the characteristic of the board. For example, the image data of the board or various characteristic amounts extracted from the image data can be used as the board characteristic data. A plurality of pieces of image data (for example, images, such as an X-ray image and a visible-light image, which are photographed by different imaging schemes, images having different resolutions, and images subjected to different pieces of image processing) or various pieces of board characteristic data may be registered with respect to one board. In the data structure example in Fig. 17(b), JPEG-format image data and data of the characteristic amount extracted from the image data are registered as the board characteristic data. There are various characteristic amounts of the board that can be extracted from the image data. Any characteristic such as a layout of the component, the shade or texture characteristic, an edge characteristic, and a histogram may be used as long as the characteristic is a characteristic amount that is significant for the board specification (identification) through the image recognition. The "mounting component data" is data in which the kind of the electronic component mounted on the board, the position on the board, the kind and content of the (recoverable) specified substance contained in the electronic component, and the like are described. The data having the format similar to that of the containing substance list in Fig. 5(c) can be used as the mounting component data. Unless the position information about the component is sued in the subsequent stage, the mounting component data may include at least the kind (such as the component ID) of the mounting component and the information about the specified substance.

### (Operation of analysis device)

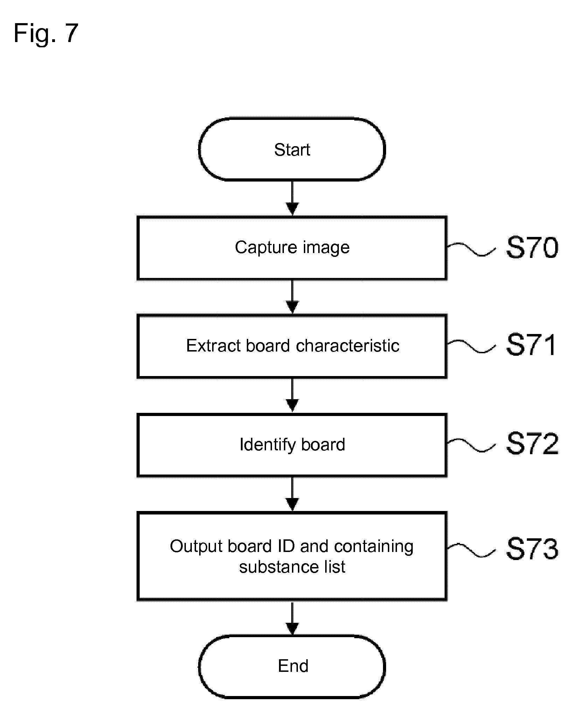

Fig. 7 is a flowchart illustrating a flow of analysis processing of the second embodiment.

The imaging unit 10 photographs the X-ray image of the component mounting board incorporated in the electronic device of the analysis object 13, and the information processor 60 captures the image data of the component mounting board (Step S70). Fig. 4(a) illustrates an example of the transmission X-ray image of the component mounting board. Because the transmission X-ray amount depends on a material or a thickness of the component on the board, an external form of each component can be observed by the shade of the image, and a metallic portion (such as the solder, lead, and metallic wiring) having high X-ray absorptance can be observed as a clear image.

The board recognizer 601 extracts a board characteristic amount from the X-ray image of the analysis object (Step S71). As described above, the layout of the component, the shade or texture characteristic, the edge characteristic, the histogram, and the like can be used as the board characteristic amount.

The board recognizer 601 refers to the board library 600 to compare the board characteristic data for each registered component with the characteristic amount extracted from the X-ray image of the analysis object, and evaluates the similarity (consistency) of the characteristic amount to specify the board (Step S72). Because various techniques generally used in the image recognition can be used with respect to a similarity calculation equation or a similarity evaluation algorithm, the detailed description is omitted. In the case that the characteristic amount extracted from the X-ray image is not similar to any registered board in the board library 600 (for example, the registered board in which the similarity exceeds a predetermined threshold does not exist), namely, in the case that the characteristic amount is an unknown board, the following pieces of processing may be skipped.

In the second embodiment, the board is specified by evaluating the similarity of the characteristic amount. Alternatively, for example, preferably the similarity between the image of the registered board and the image of the analysis object is evaluated by calculating the correlation coefficient or difference image between the images. In the case that the similarity between the images is evaluated, a processing speed may be enhanced by the use of the low-resolution image or the division of the image into small blocks.

In the case that the board recognizer 601 successfully recognizes the board, the containing substance decision unit 602 reads the board ID and mounting component data of the board from the board library 600. The containing substance list in Figs. 5(a) to 5(d) is produced, the board ID and the containing substance list are output as the an analysis result, and the processing is ended (Step S73).

In the analysis device of the second embodiment, similar to the first embodiment, the treatment to recover and recycle the specified substance can efficiently be performed because whether specified substances such as noble metals and rare metals are contained in the electronic device or the component mounting board can automatically be determined. The use of the X-ray image can recognize the components, such as the component existing in the electronic device, the component of a multilayer board, and the component mounted on the back side of the board, which are invisible from the appearance, and the analysis device of the first embodiment can be used in various objects. Additionally, the simplification and speed enhancement of the processing can be expected by adopting the board recognition method, and the accurate information about the position or containing substance of each component on the board can be acquired from the board library 600.

### <THIRD EMBODIMENT>

A third embodiment is a configuration in which a recognition rate is improved by a combination of the board recognition and the component recognition. The configuration unique to the third embodiment will mainly be described below, and the description of the configuration common to the first and second embodiments is omitted.

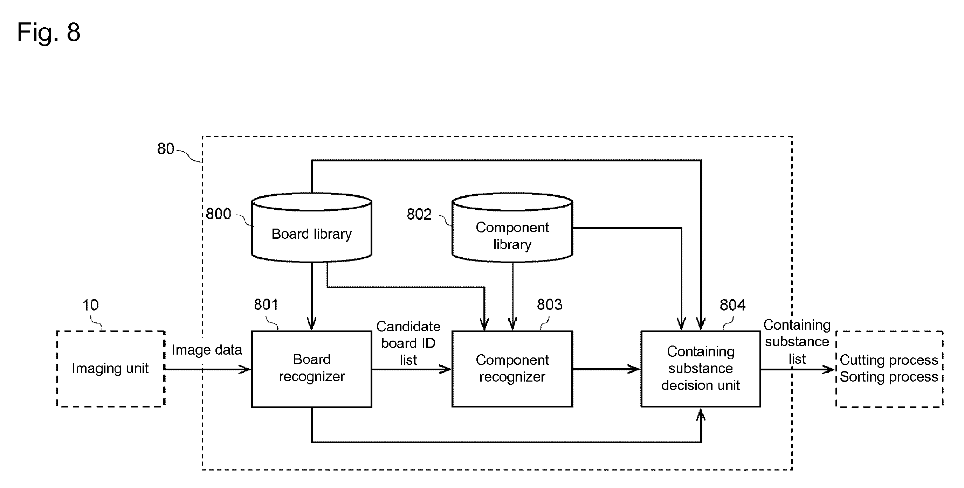

Fig. 8 illustrates a functional configuration of an information processor of the third embodiment. An information processor 80 has functions of a board library 800, a board recognizer 801, a component library 802, a component recognizer 803, a containing substance decision unit 804, and the like. The pieces of data stored in the board library 800 and component library 802 are similar to those of the first and second embodiments.

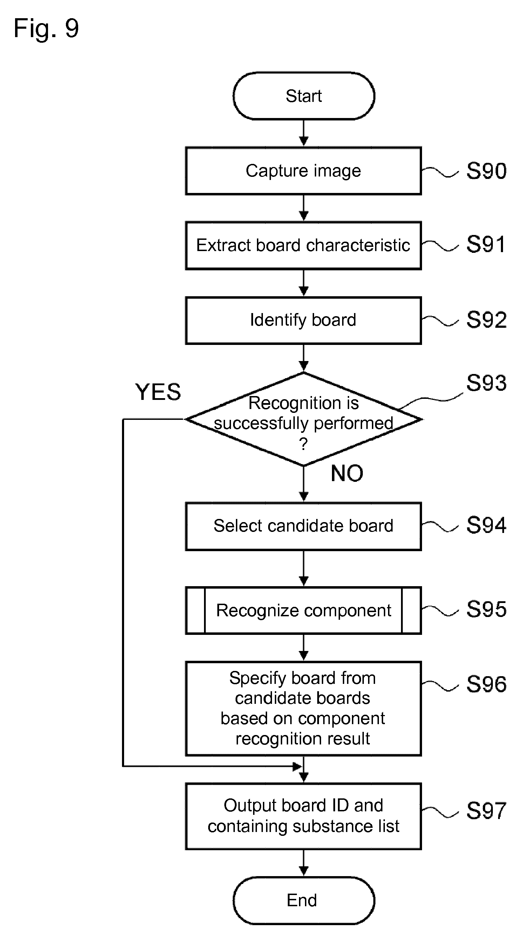

Fig. 9 is a flowchart illustrating a flow of analysis processing of the third embodiment.

The imaging unit 10 photographs the X-ray image of the component mounting board incorporated in the electronic device of the analysis object, and the information processor 80 captures the image data of the component mounting board (Step S90). Then the board recognizer 801 extracts the board characteristic amount from the X-ray image of the analysis object (Step S91). The board recognizer 801 refers to the board library 800 to compare the board characteristic data for each registered component with the characteristic amount extracted from the X-ray image of the analysis object, and evaluates the similarity (consistency) of the characteristic amount to specify the board (Step S92). The pieces of processing in Steps S90 to S92 are identical to Steps S70 to S72 in Fig. 7 of the second embodiment.

The board recognizer 801 branches the processing based on whether the board of the analysis object is successfully recognized (Step S93). As to whether the board is successfully recognized, for example, the determination that the board is successfully recognized is made when only one registered board having the similarity more than a predetermined threshold is detected, and the determination of the false recognition is made when the registered board having the similarity more than the predetermined threshold does not exist, or when a plurality of registered boards having comparable similarities exist (that is, when the boards are not narrowed down to one registered board).

When the determination of the false recognition is made (NO in Step S93), the board recognizer 801 selects some registered boards that are likely to be identical to the analysis object as candidate boards from the board library 800 (Step S94). For example, N candidate boards may be selected in the descending order of the similarity calculated in Step S92, or all the registered boards having the similarities more than a certain standard may be selected as the candidate boards. The board recognizer 801 produces a candidate board ID list in which the board ID of each selected candidate board is described, and transfers the candidate board ID list to component recognizer 803.

The component recognizer 803 performs the component recognition processing on the X-ray image of the component mounting board to specify each component mounted on the board of the analysis object (Step S95). Because the contents of the component recognition processing are similar to those in Steps S31 to S35 of the first embodiment in Fig. 3, the description is omitted. In Step S95, all the components on the board are not necessarily specified, but only some main components (such as the large-size component and the component of the BGA or LGA package) may be specified. The component recognizer 803 narrows down the board including a component group specified in Step S95 from the plurality of candidate boards included in the candidate board ID list (Step S96). The information (such as the component ID and the component position) about the component mounted on each candidate board can be acquired by referring to the board data of the board library 800 using the board ID. In the case that the candidate boards cannot be narrowed down to one board in Step S96, the analysis object is determined to be an unknown board, and the following processing is skipped.

In the case that the candidate boards can be narrowed down to one board in Step S96, or that the board is successfully recognized in Step S93, the containing substance decision unit 804 reads the board ID and mounting component data of the board from the board library 800. The containing substance list in Figs. 5(a) to 5(d) is produced, the board ID and the containing substance list are output as the an analysis result, and the processing is ended (Step S97).

In the analysis device of the third embodiment, similarly to the first and second embodiments, the treatment to recover and recycle the specified substance can efficiently be performed because whether specified substances such as noble metals and rare metals are contained in the electronic device or the component mounting board can automatically be determined. The use of the X-ray image can recognize the components, such as the component existing in the electronic device, the component of a multilayer board, and the component mounted on the back side of the board, which are invisible from the appearance, and the analysis device of the first embodiment can be used in various objects. Additionally, the board recognition of the relatively light processing is initially performed, and the component recognition is auxiliarily performed in the case that it is difficult to perform the recognition in units of boards, so that the processing efficiency can be improved as a whole while the board recognition rate can be improved.

### <FOURTH EMBODIMENT>

A fourth embodiment is a configuration in which the board is specified using the component recognition result. The configuration unique to the fourth embodiment will mainly be described below, and the description of the configuration common to the first to third embodiments is omitted.

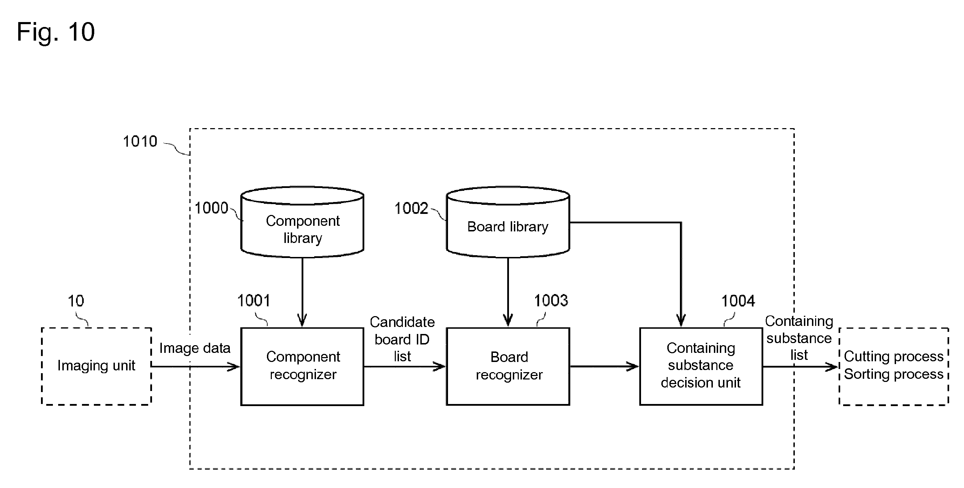

Fig. 10 illustrates a functional configuration of an information processor of the fourth embodiment. An information processor 1010 has functions of a component library 1000, a component recognizer 1001, a board library 1002, a board recognizer 1003, a containing substance decision unit 1004, and the like. The pieces of data stored in the component library 1000 and board library 1002 are similar to those of the first to third embodiments. However, the board characteristic data needs not to be stored in the board library 1002 in the case that the board recognizer 1003 does not use the board characteristic data.

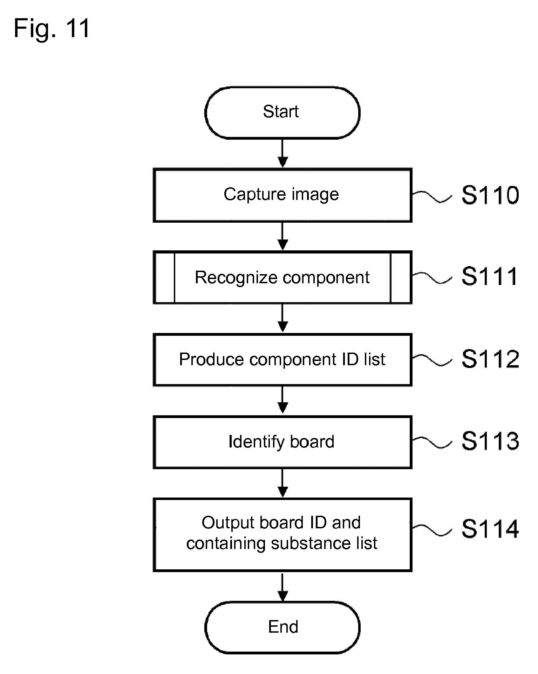

Fig. 11 is a flowchart illustrating a flow of analysis processing of the fourth embodiment.

The imaging unit 10 photographs the X-ray image of the component mounting board that is of the analysis object, and the information processor 1010 captures the image data of the component mounting board (Step S110). The component recognizer 1001 performs the component recognition processing on the X-ray image of the analysis object to specify each component mounted on the board of the analysis object (Step S111). Because the contents of the component recognition processing are similar to those in Steps S31 to S35 of the first embodiment in Fig. 3, the description is omitted. In Step S111, all the components on the board are not necessarily specified, but only some main components (such as the large-size component and the component of the BGA or LGA package) may be specified. The component recognizer 1001 produces the component ID list in which the component ID of each specified component is described, and transfers the component ID list to component recognizer 1003 (Step S112).

The board recognizer 1003 refers to the board library 1002 to narrow down the board including the component group described in the component ID list from the registered boards (Step S113). When the plurality of registered boards including the component group described in the component ID list exist, the board recognizer 1003 may narrow down the plurality of registered boards to one board by comparing the pieces of image data or characteristic amounts of the board with each other. The specific method is already described in the second embodiment. In the case that the corresponding board is not found in the registered boards, namely, in the case that the analysis object is an unknown board, the following step is skipped.

In the case that the registered boards can be narrowed down to one board in Step S113, the containing substance decision unit 1004 reads the board ID and mounting component data of the board from the board library 1002. The containing substance list in Figs. 5(a) to 5(d) is produced, the board ID and the containing substance list are output as the an analysis result, and the processing is ended (Step S114).

In the analysis device of the third embodiment, similarly to the first and second embodiments, the treatment to recover and recycle the specified substance can efficiently be performed because whether specified substances such as noble metals and rare metals are contained in the electronic device or the component mounting board can automatically be determined. The use of the X-ray image can recognize the components, such as the component existing in the electronic device, the component of a multilayer board, and the component mounted on the back side of the board, which are invisible from the appearance, and the analysis device of the first embodiment can be used in various objects. The board is specified based on the component recognition result, and the information about the containing substance or position of each component is acquired from the board library. Therefore, all the components are not necessarily recognized with high accuracy from the image of the analysis object, and the simplification and speed enhancement of the processing can be achieved. Additionally, the information about the containing substance or position of each component on the board can correctly be acquired.

### <FIFTH EMBODIMENT>

The production of the component data, the registration of the component data in the component library, the production of the board data, and the registration of the board data in the board library will be described in a fifth embodiment.

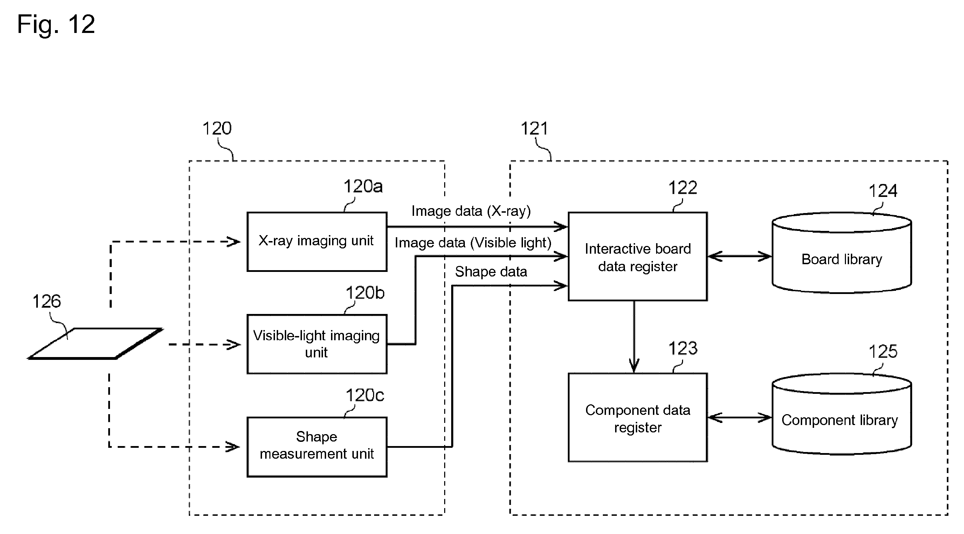

Fig. 12 is a view illustrating a library creation device that produces the component data and board data and registers the component data and board data in the library. The library creation device is roughly constructed with a measurement unit 120 and an information processor 121. The library creation device may be separated from the analysis device, or mounted as one function of the analysis device.

The measurement unit 120 measures a registration object 126 (such as the electronic device and the component mounting board), and outputs measured data obtained from the registration object 126 to the information processor 121. In the fifth embodiment, the measurement unit 120 includes an X-ray imaging unit 120a that photographs a transmission X-ray image, a visible-light imaging unit 120b that photographs a visible-light image (appearance), and a shape measurement unit 120c that measures a three-dimensional shape of the board or component. Various devices such as a device that measures a surface shape using special pattern lighting and a device that measures the surface shape using a laser displacement meter can be used as the shape measurement unit 120c. Additionally, for example, an X-ray tomographic apparatus such as a tomosynthesis apparatus and a CT apparatus may be used as the measurement unit 120.

The information processor 121 has functions of an interactive board data register 122 and a component data register 123. Typically the information processor 121 can be constructed with a computer including a CPU (Central Processing Unit), a RAM (Random Access memory), an auxiliary storage device such as a magnetic disk and a semiconductor memory, an input device, a display device, and a communication interface. In this case, the CPU reads and executes a program stored in a storage device such as the auxiliary storage device, thereby implementing each function of the information processor 121. The configuration of the information processor 121 can be constructed with one computer, or implemented by a client-server scheme, grid computing, or cloud computing. Alternatively, all or a part of the functions of the information processor 121 can be implemented by a logic circuit such as an ASIC and an FPGA or an on-board computer. A board library 124 and a component library 125 in Fig. 12 may be stored in a local storage such as the auxiliary storage device of the information processor 121, or stored in a network storage such as a server and a cloud.

### (Registration processing)

For example, in the case that a manufacturer releases a new electronic device, or that the analysis device makes the determination of an unknown board, the board data and the component data are newly registered using the library creation device.

As illustrated in Fig. 12, the measurement unit 120 measures the board when the component mounting board of the registration object 126 is provided to the measurement unit 120. In the fifth embodiment, the X-ray imaging unit 120a obtains the data of the two-dimensional transmission X-ray image of the board, the visible-light imaging unit 120b obtains the data of the two-dimensional visible-light image of the board, and the shape measurement unit 120c obtains the data of the surface shape (three-dimensional profile) of the board. The information processor 121 captures these pieces of measured data.

The interactive board data register 122 has a function of providing an environment in which the board data and the component data can interactively be input using a GUI (Graphical User Interface) to the user. For example, when the user selects the pieces of measured data captured from the measurement unit 120 to execute a new board command, the pieces of measured data are displayed on a display device, and the interactive board data register 122 allocates the board ID. Any numerical character or character string may be allocated as the board ID, or the manufacturer, the serial number, or the board number may be read from the visible-light image to produce the board ID. Alternatively, the user may input the board ID.

The user inputs the component data with respect to the transmission X-ray image or visible-light image that is displayed on the display device. For example, when the user designates the component region using an input device such as a mouse to execute a component registration command, a component data input window (not illustrated) is displayed to encourage the user to input the component ID and the containing substance data. The user inputs the component ID of the component and information about the kind and content of the specified substance contained in the component. At this point, the interactive board data register 122 searches the component library 125. In the case that the registered component (or the registered component similar to) identical to the component exists, the interactive board data register 122 may assist the user to input the component data of the component by providing the information about the component to the user, or automatically reflecting the information about the component to the component data.

The interactive board data register 122 extracts the component characteristic data of the component. Examples of the component characteristic data include the image data of the visible-light image of the component, the image data of the transmission X-ray of the component, various characteristic amounts (such as the size and shape of the component, the number, shape, size, and arrangement of the solder, the number, shape, size, and arrangement of the electrode, the characteristic of the shade or texture, the edge characteristic, and the histogram) extracted from the pieces of image data, the component position on the board, and a height and an attitude of the component obtained from the surface shape. The kind of the component characteristic data to be registered may properly be selected according to the function or use of the analysis device.

When the user executes a data registration command after the input of the component data is ended with respect to all the components on the board, the interactive board data register 122 produces the board characteristic data. Examples of the board characteristic data include the visible-light image data or transmission X-ray image data of the board and various characteristic amounts (such as the layout of the component, the characteristic of the shade or texture, the edge characteristic, and the histogram) extracted from the pieces of image data. The kind of the board characteristic data to be registered may properly be selected according to the function or use of the analysis device. The interactive board data register 122 additionally registers the acquired board data in the board library 124.

The component data register 123 has a function of registering the component data in the component library 125. The component data register 123 receives the component data, which is input to or acquired with the interactive board data register 122, to update the component library 125. At this point, in the case that the identical component data is already registered in the component library 125, the component data register 123 may improve reliabilities of the component characteristic data and containing substance data by adopting higher-reliability data from the new data and the existing data, or performing statistical processing (such as average) of the new data and the existing data. Therefore, the component recognition rate can be expected to be improved in the analysis device.

The registration of the unknown object 126 in the board data and component data libraries is completed. The user of the analysis device can use the registration processing of the fifth embodiment in a process of causing the analysis device to learn an unknown object, or a person (service provider) who sells and maintain the analysis device can produce data of a new product to provide the analysis device to the user. As to a way to provide the data of the new product, a recording medium may be distributed, downloaded through a network, or provided as a cloud service (the latest board library and component library are prepared in the online storage).

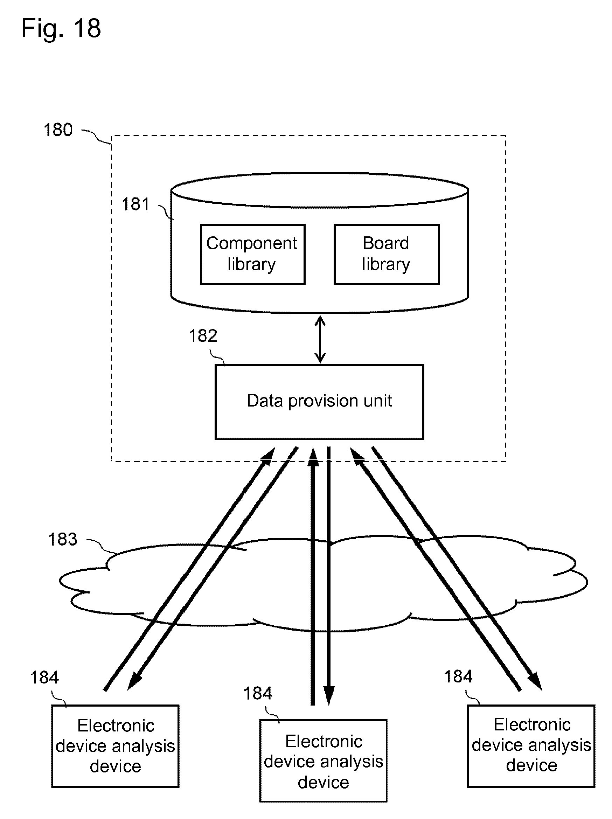

Fig. 18 illustrates a configuration example of the cloud service of the library. A library provision system 180 includes a large-capacity storage (storage device) 181 in which the board library and the component library are registered and a data provision unit 182. Typically the library provision system 180 can be constructed with a server computer including a CPU (Central Processing Unit), a RAM (Random Access memory), an auxiliary storage device such as a magnetic disk and a semiconductor memory, an input device, and a communication interface. In this case, the CPU reads and executes a program stored in a storage device such as the auxiliary storage device, thereby implementing each function of the library provision system 180. The library provision system 180 may be constructed with one computer or a plurality of computers.

When receiving a library use request from one of electronic device analysis devices 184 connected to the data provision unit 182 through a network 183 such as the Internet, the data provision unit 182 transmits the data of the board library or component library stored in the storage 181 to the electronic device analysis device 184. That is, the data provision unit 182 has functions of the board recognizer, component recognizer, and containing substance decision unit of the electronic device analysis device in Figs. 2, 6, 8, 10, and 13 and a function of mediating with the board library and component library (also referred to as an "online library") of the online storage 181.

In the mechanism in Fig. 18, the identical library is shared by the plurality of electronic device analysis devices 184, so that the effective use of the data can be achieved. For a user of the electronic device analysis device 184, because the library can be used on line, the storage capacity can be decreased on the side of the electronic device analysis device 184, and the latest library can always be used (even if the user does not update the data of the library).

In the case that the online library is usable, the library needs not to be stored in the local storage of the electronic device analysis device 184. Alternatively, while the library (also referred to as a "local library") is stored in the local storage of the electronic device analysis device 184, the local library and the online library may properly be used. For example, the local library is referred to by default, and the online library may be referred to in the case that the corresponding component or board is not found in the local library. Alternatively, preferably the electronic device analysis device 184 automatically or manually acquires the latest data from the online library to update the local library.

A business model, where a person who produces the component data or the board data to register the pieces of data in the library provides the pieces of data to a third party by the cloud service for profit, may be constructed. This means formation of a sensing data market that sells sensing data obtained with the X-ray imaging apparatus to a consumer who uses an application system in which the sensing data is required through the Internet.

loT (Internet of Things) is advocated as an infrastructure realizing an optimum society. From a macroscopic viewpoint, loT forms a system that optimizes resources such as time, space, human, information, and energy by various grain sizes. The optimization means that resources are transferred from a low-necessity portion to a high-necessity portion or that resources can be used in a higher-value form. Because a "transaction" is made in transfer of a resource or setting of a right to use, a distribution function is required as the infrastructure of the transaction. It is necessary that loT have a "sensing data distribution function" as one of the distribution functions.

The cloud service of the component data or board data corresponds to a sensing data distribution function in loT. In other words, the mechanism that decides from which one of library providers the user purchases the sensing data using metadata including the kind of the interesting specified substance (resource) and the kind and value of the object component as a matching item for the data distribution can be constructed.

### <SIXTH EMBODIMENT>

A sixth embodiment is a configuration in which a board analysis technique is properly selected based on a pre-sensing result.

### (Configuration of analysis device)

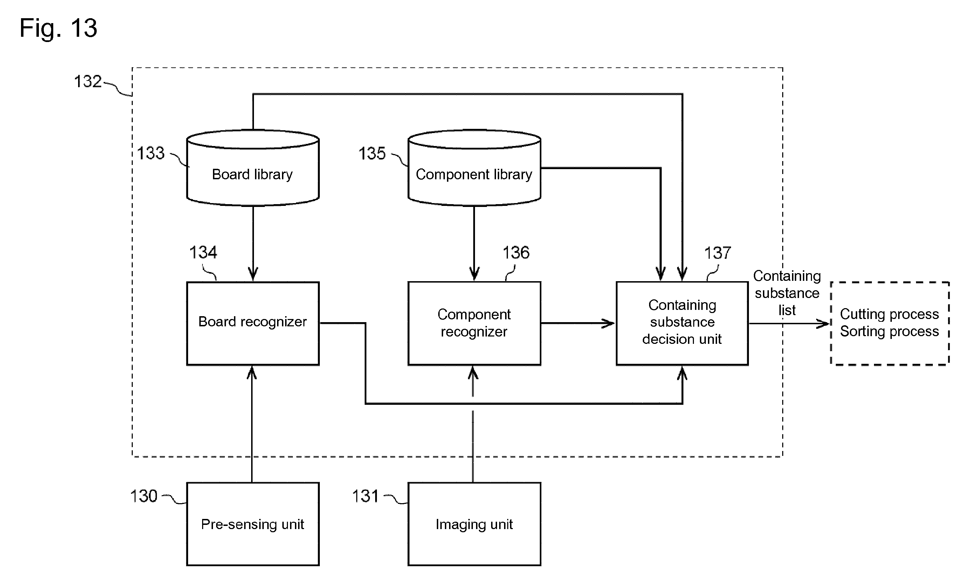

A configuration of an analysis device according to a sixth embodiment will be described below with reference to Fig. 13. Fig. 13 is a view schematically illustrating the configuration of the analysis device of the sixth embodiment.

The analysis device includes a pre-sensing unit 130, an imaging unit 131, and an information processor 132. The information processor 132 has functions of aboard library 133, a board recognizer 134, a component library 135, a component recognizer 136, and a containing substance decision unit 137.

The pre-sensing unit 130 simply measures the analysis object 13 (such as the electronic device and the component mounting board) prior to the main measurement of the imaging unit 131. In the sixth embodiment, a CCD camera that photographs the visible-light image (appearance image) of the analysis object 13 is used as the pre-sensing unit 130. Sensing data (image data) obtained with the pre-sensing unit 130 is input to the information processor 132. The imaging unit 131 can take tomographic photographing of the analysis object 13. In the sixth embodiment, the X-ray imaging apparatus such as such as tomosynthesis and CT is used as the imaging unit 131. Although the X-ray tomographic photographing has a merit that detailed information about the electronic device or the multilayer board can be observed, the X-ray tomographic photographing has a demerit that it takes a long time for photographing and image reconfiguration processing. In the sixth embodiment, the necessity of the X-ray tomographic photographing is determined from a result of the pre-sensing that can simply be measured in a short time, whereby the efficiency of the processing is improved.

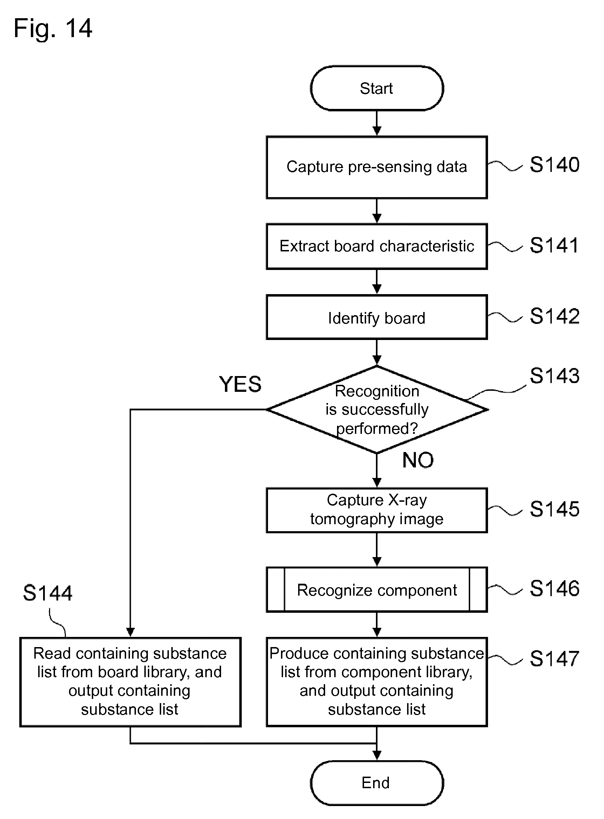

Fig. 14 is a flowchart illustrating a flow of analysis processing of the sixth embodiment.

The pre-sensing unit 130 photographs the visible-light image (appearance image) of the analysis object 13, and the information processor 132 captures the image data of the analysis object 13 (Step S140). Then the board recognizer 134 extracts the board characteristic amount from the image data of the analysis object 13 (Step S141). Examples of the board characteristic amount include the size, color, and shape of the board, the layout of the component, the characteristic of the shade or texture, and the edge characteristic. The board recognizer 134 refers to the board library 133 to compare the board characteristic data for each registered component with the characteristic amount extracted from the image data of the analysis object 13, and evaluates the similarity (consistency) of the characteristic amount to specify the board (Step S142).

When the board is successfully recognized using the appearance image (YES in Step S143), because the information about the component mounted on the board or the containing substance can be acquired from the board library 133, the X-ray tomographic photographing and the component recognition are skipped. That is, the containing substance decision unit 137 reads the mounting component data of the board from the board library 133, produces a containing substance list from the mounting component data of the board, and outputs the containing substance list, and the analysis processing is ended (Step S144).

On the other hand, when the board cannot be recognized using the appearance image (NO in Step S143), the analysis object 13 is conveyed to the imaging unit 131. The imaging unit 131 photographs the X-ray tomographic image of the analysis object 13, and the information processor 132 captures the image data of the analysis object 13 (Step S145). The component recognizer 136 performs the component recognition processing on the X-ray tomographic image to specify each component mounted on the board (Step S146). The content in Step S146 is similar to that in Steps S31 to S35 of Fig. 3 of the first embodiment. The containing substance decision unit 137 produces and outputs the containing substance list in which the kind and content of the containing substance of each component specified in Step S146, and the analysis processing is ended (Step S147). The content in Step S147 is similar to that in Step S36 of Fig. 3.

In the analysis device of the sixth embodiment, similarly to the first embodiment, the treatment to recover and recycle the specified substance can efficiently be performed because whether specified substances such as noble metals and rare metals are contained in the electronic device or the component mounting board can automatically be determined. The X-ray imaging and the necessity of the component recognition are determined according to the pre-sensing result, so that the processing efficiency can be improved as a whole.

Not the appearance image but the two-dimensional transmission X-ray image in Fig. 1 may be used in the pre-sensing. The board recognition is performed using the transmission X-ray image like the second embodiment, the mounting component data may be acquired from the board library when the recognition is successfully performed, and the X-ray tomographic photographing may be performed when it is difficult to recognize the board using the transmission X-ray image due to, for example, component overlapping like the multilayer board.

In the sixth embodiment, whether the X-ray tomographic photographing is performed is determined according to the pre-sensing result. Alternatively, a condition of the X-ray tomographic photographing may be changed according to the pre-sensing result. For example, in the pre-sensing, a thickness of the analysis object is measured with a laser displacement meter, and the number of photographing times or a pitch of the X-ray tomographic photographing may be adjusted according to the thickness. That is, only one layer is photographed for the thin electronic device, and at least two layers are photographed for the thick electronic device. Therefore, the wasted tomographic photographing is eliminated, so that the processing efficiency can be improved as a whole.

### <SEVENTH EMBODIMENT>

An analysis device according to a seventh embodiment has a function of automatically deciding a method for taking out the specified substance from the electronic device or component mounting board. The configuration unique to the seventh embodiment will mainly be described below, and the description of the configuration common to the first to sixth embodiments is omitted.

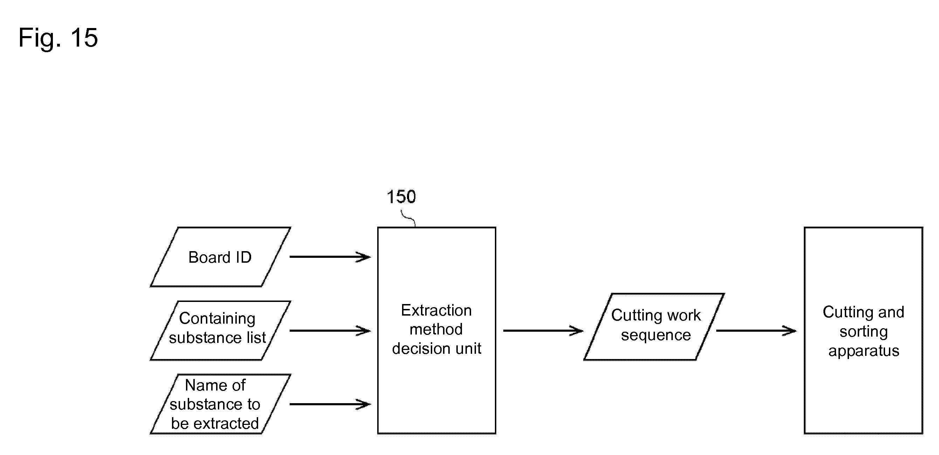

Fig. 15 schematically illustrates a specified substance extraction method decision function included in the analysis device of the seventh embodiment. The specified substance extraction method decision function can be added as an additional function of the analysis device of each of the first to sixth embodiments. An extraction method decision unit 150 receives the containing substance list obtained through the board recognition and/or component recognition. The containing substance list includes the board ID, the kind and content of the specified substance contained in each component, and the position information about each component. For example, in the case that the specified substance "tantalum" is extracted from the board, the extraction method decision unit 150 determines where the component (such as a tantalum capacitor) containing tantalum is located on the board based on the containing substance list, and decides how to cut the board in order to efficiently take out the extraction object component. A cutting work sequence data in which a board cutting position and a board cutting procedure are defined is produced, and transferred to a cutting and sorting apparatus of a subsequent process. In the cutting and sorting apparatus, the board is cut according to the cutting work sequence data, and the extraction object component can be sorted from a remaining portion. The automatic cutting and sorting of the component can achieve the efficient recovery of the specified substance, and reduce the recovery cost.

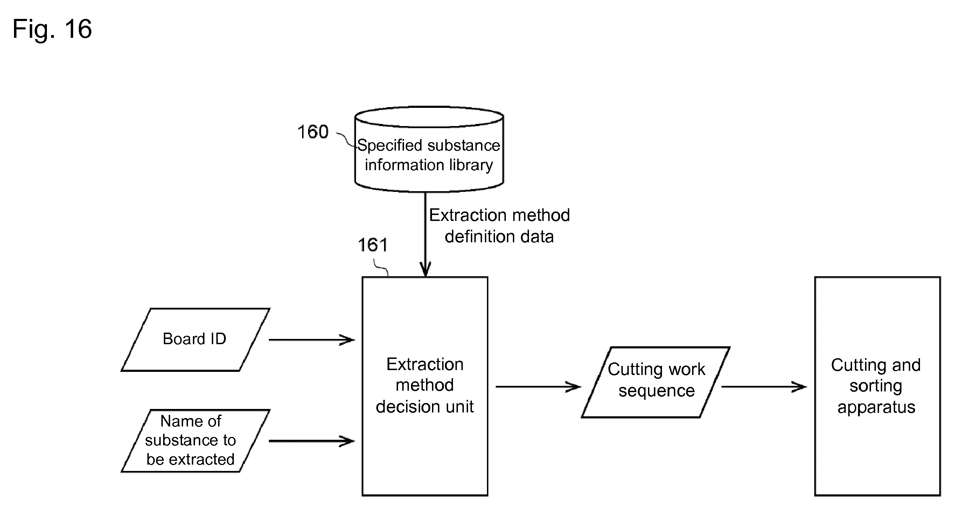

Fig. 16 illustrates another configuration example of the specified substance extraction method decision function. An extraction method definition data in which the specified substance extraction method is defined is previously produced in each kind of the board, and the board ID and the extraction method definition data are registered in a specified substance information library 160 while associated with each other. When receiving the board ID specified through the board recognition and/or component recognition, an extraction method decision unit 161 reads the corresponding extraction method definition data from the specified substance information library 160. The extraction method (such as the board cutting position and the board cutting procedure) corresponding to the specified substance to be extracted is acquired from the extraction method definition data to produce the cutting work sequence data, and the cutting work sequence data is transferred to the cutting and sorting apparatus. In the configuration of FIG. 16, the automatic cutting and sorting of the component can also reduce the recovery cost.

### <OTHER EMBODIMENTS>

The configurations of the above embodiments illustrate specific examples of the present invention, but the scope of the present invention is not limited to the configurations of the above embodiments. Various modifications can be made without departing from the scope of the present invention.

For example, in the above embodiments, the X-ray image is used in the component recognition or the board recognition. Alternatively, the image data (such as the visible-light image (appearance image)) except for the X-ray image may be used in the component recognition or the board recognition. In the above embodiments, the position information about the component of the board library is calculated from the image. In the case that design information (such as CAD data) about the electronic device or the board is usable, the design information may be stored in the board data of the board library. In the above embodiments, the data structure of the component library or board library is described only by way of example. However, the database, the data structure of the database, or the data content may be designed anyway as long as the information processing of the present invention can be performed to accomplish the object.

### DESCRIPTION OF SYMBOLS

- 1:: electronic device analysis device
- 10:: imaging unit
- 11:: information processor
- 12:: conveying device
- 13:: analysis object

## Claims

1. A data structure, wherein characteristic data expressing a characteristic of a useful body used in object recognition with a computer and containing substance data expressing a kind and a content of a recyclable specified substance contained in the useful body are associated with each other in each kind of the useful body with respect to the useful body, the useful body being a constituent component of an electronic device and an electronic device, the electronic device and the electronic device containing the specified substance.

2. The data structure according to claim 1, wherein the characteristic data includes image data of the useful body and/or data expressing the characteristic extracted from the image data of the useful body.

3. The data structure according to claim 2, wherein the image data is X-ray image data.

4. A library creation device that produces a useful body library having the data structure according to any one of claims 1 to 3, the library creation device comprising:
a measurement unit configured to measure a registration object; and
an information processor configured to produce characteristic data for identifying the registration object based on measured data obtained with the measurement unit, and register the produced characteristic data in the useful body library together with containing substance data of the registration object, the containing substance data of the registration object being provided by a user.

5. A library creation method for producing a useful body library having the data structure according to any one of claims 1 to 3, the library creation method comprising the steps of:
measuring a registration object with a measurement unit;
producing characteristic data for identifying the registration object using an information processor based on measured data obtained with the measurement unit; and
registering the produced characteristic data in the useful body library together with containing substance data of the registration object, the containing substance data of the registration object being provided by a user.

6. An electronic device analysis device comprising:
a storage device in which a useful body library having the data structure according to any one of claims 1 to 3 is stored;
a recognizer configured to specify which useful body corresponds to an analysis object by comparing information obtained from the analysis object with characteristic data of each useful body in the useful body library stored in the storage device; and
a containing substance decision unit configured to decide a kind and a content of a specified substance contained in the analysis object by acquiring containing substance data of the corresponding useful body from the useful body library based on a recognition result of the recognizer.

7. An electronic device analysis device connectable to a system including a storage device in which a useful body library having the data structure according to any one of claims 1 to 3 is stored, the electronic device analysis device comprising:
a recognizer configured to specify which useful body corresponds to an analysis object by comparing information obtained from the analysis object with characteristic data of each useful body in the useful body library acquired from the system; and
a containing substance decision unit configured to decide a kind and a content of a specified substance contained in the analysis object by acquiring containing substance data of the corresponding useful body from the useful body library based on a recognition result of the recognizer.

8. A library provision system comprising:
a storage device in which a useful body library having the data structure according to any one of claims 1 to 3 is stored; and
a data provision unit configured to provide data of the useful body library stored in the storage device to the electronic device analysis device through a network in response to a request from an electronic device analysis device connected through the network.

9. An electronic device analysis device comprising:
a storage device in which a component library is stored, the component library having a data structure in which component characteristic data expressing a characteristic of an electronic component and containing substance data expressing a kind and a content of a specified substance contained in the electronic component are associated with each other in each kind of the electronic component;
an imaging unit configured to acquire image data by photographing an object board that is of a component mounting board for an analysis object;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and
a containing substance decision unit configured to decide the kind and the content of the specified substance contained in the object board from a recognition result of the component recognizer and the containing substance data of each electronic component, the containing substance data of each electronic component being stored in the component library.

10. An electronic device analysis device comprising:
a storage device in which a board library is stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board;
an imaging unit configured to acquire image data by photographing an object board that is of the component mounting board for an analysis object;
a board recognizer configured to specify a kind of the object board by comparing a characteristic of the image data of the object board with the board characteristic data of each electronic component, the image data of the object board being acquired with the imaging unit, the board characteristic data of each electronic component being stored in the board library; and
a containing substance decision unit configured to decide the kind and the content of the specified substance contained in the object board by acquiring the mounting component data of the corresponding component mounting board from the board library based on a recognition result of the component recognizer.

11. An electronic device analysis device comprising:
a storage device in which a board library and a component library are stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component;
an imaging unit configured to acquire image data by photographing an object board that is of the component mounting board for an analysis object;
a board recognizer configured to specify a kind of the object board by comparing a characteristic of the image data of the object board with the board characteristic data of each electronic component, the image data of the object board being acquired with the imaging unit, the board characteristic data of each electronic component being stored in the board library;
a component recognizer configured to compare a characteristic of the image data of the object board with the component characteristic data of each electronic component when the board recognizer fails to recognize the object board, the image data of the object board being acquired with the imaging unit, the component characteristic data of each electronic component being stored in the component library, and specify the kind of the object board by specifying the kind of the electronic component mounted on the object board; and
a containing substance decision unit configured to decide the kind and the content of the specified substance contained in the object board by acquiring the mounting component data of the corresponding component mounting board from the board library based on a recognition result of one of the board recognizer and the component recognizer.

12. An electronic device analysis device comprising:
a storage device in which a component library and a board library are stored, the component library having a data structure in which component characteristic data expressing a characteristic of an electronic component and containing substance data expressing a kind and a content of a specified substance contained in the electronic component are associated with each other in each kind of the electronic component, the board library having a data structure in which board characteristic data expressing a characteristic of a component mounting board, the electronic component mounted on the component mounting board, and mounting component data expressing a kind and a content of the specified substance contained in the electronic component are associated with one another in each kind of the component mounting board;
an imaging unit configured to acquire image data by photographing an object board that is of the component mounting board for an analysis object;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library;
a board recognizer configured to specify a kind of the object board by comparing a recognition result of the component recognizer with the mounting component data of each component mounting board, the mounting component data of each component mounting board being stored in the board library; and
a containing substance decision unit configured to decide the kind and the content of the specified substance contained in the object board by acquiring the mounting component data of the corresponding component mounting board from the board library based on a recognition result of the board recognizer.

13. An electronic device analysis device comprising:
a storage device in which a board library and a component library are stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component;
an imaging unit configured to acquire image data by photographing an object board that is of the component mounting board for an analysis object;
a pre-sensing unit configured to acquire sensing data of the object board by measuring the object board in a manner simpler than that of the imaging unit;
a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and
a containing substance decision unit configured to decide the kind and the content of the specified substance contained in the object board by acquiring the mounting component data of the corresponding component mounting board from the board library based on a recognition result of the board recognizer, or by acquiring containing substance data of the corresponding component to be mounted from the component library based on a recognition result of the component recognizer,
wherein whether the imaging unit needs to photograph the object board is determined according to the recognition result of the object board with the board recognizer.

14. An electronic device analysis device comprising:
a storage device in which a board library and a component library are stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component;
an imaging unit configured to acquire image data by photographing an object board that is of the component mounting board for an analysis object;
a pre-sensing unit configured to acquire sensing data of the object board by measuring the object board in a manner simpler than that of the imaging unit;
a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and
a containing substance decision unit configured to decide the kind and the content of the specified substance contained in the object board by acquiring the mounting component data of the corresponding component mounting board from the board library based on a recognition result of the board recognizer, or by acquiring containing substance data of the corresponding component to be mounted from the component library based on a recognition result of the component recognizer,
wherein a photographing condition of the object board with the imaging unit is decided based on the pre-sensing data.

15. An electronic device analysis device connectable to a system through a network, a component library being stored in the system, the component library having a data structure in which component characteristic data expressing a characteristic of an electronic component and containing substance data expressing a kind and a content of a specified substance contained in the electronic component are associated with each other in each kind of the electronic component, the electronic device analysis device comprising:
an imaging unit configured to acquire image data by photographing an object board that is of a component mounting board for an analysis object;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and
a containing substance decision unit configured to decide the kind and the content of the specified substance contained in the object board from a recognition result of the component recognizer and the containing substance data of each electronic component, the containing substance data of each electronic component being stored in the component library.

16. An electronic device analysis device connectable to a system through a network, a board library being stored in the system, the board library having a data structure in which component characteristic data expressing a characteristic of an electronic component and containing substance data expressing a kind and a content of a specified substance contained in the electronic component are associated with each other in each kind of the electronic component, the electronic device analysis device comprising:
an imaging unit configured to acquire image data by photographing an object board that is of the component mounting board for an analysis object;
a board recognizer configured to specify a kind of the object board by comparing a characteristic of the image data of the object board with the board characteristic data of each electronic component, the image data of the object board being acquired with the imaging unit, the board characteristic data of each electronic component being stored in the board library; and
a containing substance decision unit configured to decide the kind and the content of the specified substance contained in the object board by acquiring mounting component data of the corresponding component mounting board from the board library based on a recognition result of the component recognizer.

17. An electronic device analysis device connectable to a system through a network, a board library and a component library being stored in the system, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component, the electronic device analysis device comprising:
an imaging unit configured to acquire image data by photographing an object board that is of the component mounting board for an analysis object;
a board recognizer configured to specify a kind of the object board by comparing a characteristic of the image data of the object board with the board characteristic data of each electronic component, the image data of the object board being acquired with the imaging unit, the board characteristic data of each electronic component being stored in the board library;
a component recognizer configured to compare a characteristic of the image data of the object board with the component characteristic data of each electronic component when the board recognizer fails to recognize the object board, the image data of the object board being acquired with the imaging unit, the component characteristic data of each electronic component being stored in the component library, and specify the kind of the object board by specifying the kind of the electronic component mounted on the object board; and
a containing substance decision unit configured to decide the kind and the content of the specified substance contained in the object board by acquiring the mounting component data of the corresponding component mounting board from the board library based on a recognition result of one of the board recognizer and the component recognizer.

18. An electronic device analysis device connectable to a system through a network, a component library and a board library being stored in the system, the component library having a data structure in which component characteristic data expressing a characteristic of an electronic component and containing substance data expressing a kind and a content of a specified substance contained in the electronic component are associated with each other in each kind of the electronic component, the board library having a data structure in which board characteristic data expressing a characteristic of a component mounting board, the electronic component mounted on the component mounting board, and mounting component data expressing a kind and a content of the specified substance contained in the electronic component are associated with one another in each kind of the component mounting board, the electronic device analysis device comprising:
an imaging unit configured to acquire image data by photographing an object board that is of the component mounting board for an analysis object;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library;
a board recognizer configured to specify a kind of the object board by comparing a recognition result of the component recognizer with the mounting component data of each component mounting board, the mounting component data of each component mounting board being stored in the board library; and
a containing substance decision unit configured to decide the kind and the content of the specified substance contained in the object board by acquiring the mounting component data of the corresponding component mounting board from the board library based on a recognition result of the board recognizer.

19. An electronic device analysis device connectable to a system through a network, a board library and a component library being stored in the system, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component, the electronic device analysis device comprising:
an imaging unit configured to acquire image data by photographing an object board that is of the component mounting board for an analysis object;
a pre-sensing unit configured to acquire sensing data of the object board by measuring the object board in a manner simpler than that of the imaging unit;
a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and
a containing substance decision unit configured to decide the kind and the content of the specified substance contained in the object board by acquiring the mounting component data of the corresponding component mounting board from the board library based on a recognition result of the board recognizer, or by acquiring containing substance data of the corresponding component to be mounted from the component library based on a recognition result of the component recognizer,
wherein whether the imaging unit needs to photograph the object board is determined according to the recognition result of the object board with the board recognizer.

20. An electronic device analysis device connectable to a system through a network, a board library and a component library being stored in the system, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component, the electronic device analysis device comprising:
an imaging unit configured to acquire image data by photographing an object board that is of the component mounting board for an analysis object;
a pre-sensing unit configured to acquire sensing data of the object board by measuring the object board in a manner simpler than that of the imaging unit;
a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and
a containing substance decision unit configured to decide the kind and the content of the specified substance contained in the object board by acquiring the mounting component data of the corresponding component mounting board from the board library based on a recognition result of the board recognizer, or by acquiring containing substance data of the corresponding component to be mounted from the component library based on a recognition result of the component recognizer,
wherein a photographing condition of the object board with the imaging unit is decided based on the pre-sensing data.

21. The electronic device analysis device according to any one of claims 9 to 20, wherein the imaging unit is an X-ray imaging apparatus that acquires an X-ray image of the object board.

22. The electronic device analysis device according to any one of claims 9 to 21, wherein the containing substance decision unit outputs data including information about the kind and the content of the specified substance contained in the object board and position information about the component on the board, the component containing the specified substance.

23. The electronic device analysis device according to claim 22, further comprising a specified substance extraction method decision unit configured to produce data in which a method for extracting the specified substance from the object board is defined based on the data including the information about the kind and the content of the specified substance contained in the object board and the position information about the component on the board, the component containing the specified substance, the data being output from the containing substance decision unit.

24. The electronic device analysis device according to any one of claims 10 to 14 and 16 to 20, further comprising a specified substance extraction method decision unit configured to acquire extraction method definition data for the component mounting board based on the recognition result of the board recognizer from a specified substance information library having a data structure in which the extraction method definition data is associated in each kind of the component mounting board, a method for extracting the specified substance from the component mounting board being defined in extraction method definition data.

## Amended claims

### Amended claims under Art. 19.1 PCT

1. [Amended] A data structure of a database used in an analysis device, the analysis device analyzing a useful body that is of an electronic device containing a recyclable specified substance or a useful body that is of a constituent component of the electronic device, the data structure comprising:
a database in which characteristic data expressing a characteristic of the useful body, the characteristic data being used in object recognition in order that the analysis device specifies a kind of the useful body, data expressing a mounting component mounted on the useful body, and a kind and a total content of the specified substance contained in the useful body, the kind and the total content of the specified substance contained in the useful body being used in processing of deciding the kind and the total content of the specified substance in the analysis device, or containing substance data expressing a kind and a content of the specified substance contained in each mounting component mounted on the useful body are associated with one another in each kind of the useful body; and
a database in which component characteristic data expressing a characteristic of the electronic component, the component characteristic data expressing the characteristic of the electronic component being used in the object recognition in order that the analysis device specifies a kind of the electronic component, and the containing substance data expressing the kind and the content of the specified substance contained in the electronic component are associated with each other in each kind of the electronic component.

2. [Amended] The data structure according to claim 1, wherein the characteristic data includes image data of the useful body and/or data expressing the characteristic extracted from the image data of the useful body, and
the component characteristic data includes image data of the electronic component and/or data expressing the characteristic extracted from the image data of the electronic component.

3. The data structure according to claim 2, wherein the image data is X-ray image data.

4. [Amended] An electronic device analysis device comprising:
a storage device in which the database having the data structure according to any one of claims 1 to 3 is stored;
a useful body recognizer configured to specify a kind of an object useful body by comparing information acquired from the object useful body constituting an analysis object with characteristic data of each useful body in the database;
a component recognizer configured to specify a kind of a mounting component mounted on the object useful body by comparing the information acquired from the object useful body with component characteristic data of each electronic component in the database; and
a containing substance decision unit configured to decide a kind and a content of a specified substance contained in the object useful body by acquiring containing substance data associated with the kind of the object useful body or the kind of the mounting component mounted on the object useful body from the database based on a recognition result of one of the useful body recognizer and the component recognizer.

5. [Amended] An electronic device analysis device connectable to a system through a network, the system including the data structure according to any one of claims 1 to 3, the electronic device analysis device comprising:
a useful body recognizer configured to specify a kind of an object useful body by comparing information acquired from the object useful body constituting an analysis object with characteristic data of each useful body in the database;
a component recognizer configured to specify a kind of a mounting component mounted on the object useful body by comparing the information acquired from the object useful body with component characteristic data of each electronic component in the database; and
a containing substance decision unit configured to decide a kind and a content of a specified substance contained in the object useful body by acquiring containing substance data associated with the kind of the object useful body or the kind of the mounting component mounted on the object useful body from the database based on a recognition result of one of the useful body recognizer and the component recognizer.

6. [Amended] The electronic device analysis device according to claim 4 or 5, wherein the component recognizer performs processing of recognizing the mounting component mounted on the object useful body when the useful body recognizer fails to recognize the object useful body.

7. [Amended] A library provision system comprising:
a storage device in which the database having the data structure according to any one of claims 1 to 3 is stored; and
a data provision unit configured to provide data of the database stored in the storage device to the electronic device analysis device through a network in response to a request from an electronic device analysis device connected through the network.

8. [Amended] An electronic device analysis device comprising:
a storage device in which a board library and a component library are stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component;
an imaging unit configured to acquire image data by photographing an object board that is of the component mounting board for an analysis object;
a board recognizer configured to specify a kind of the object board by comparing a characteristic of the image data of the object board with the board characteristic data of each electronic component, the image data of the object board being acquired with the imaging unit, the board characteristic data of each electronic component being stored in the board library;
a component recognizer configured to compare a characteristic of the image data of the object board with the component characteristic data of each electronic component when the board recognizer fails to recognize the object board, the image data of the object board being acquired with the imaging unit, the component characteristic data of each electronic component being stored in the component library, and specify the kind of the object board by specifying the kind of the electronic component mounted on the object board; and
a containing substance decision unit configured to decide the kind and the content of the specified substance contained in the object board by acquiring the mounting component data of the corresponding component mounting board from the board library based on a recognition result of one of the board recognizer and the component recognizer.

9. [Amended] An electronic device analysis device comprising:
a storage device in which a component library and a board library are stored, the component library having a data structure in which component characteristic data expressing a characteristic of an electronic component and containing substance data expressing a kind and a content of a specified substance contained in the electronic component are associated with each other in each kind of the electronic component, the board library having a data structure in which board characteristic data expressing a characteristic of a component mounting board, the electronic component mounted on the component mounting board, and mounting component data expressing a kind and a content of the specified substance contained in the electronic component are associated with one another in each kind of the component mounting board;
an imaging unit configured to acquire image data by photographing an object board that is of the component mounting board for an analysis object;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library;
a board recognizer configured to specify a kind of the object board by comparing a recognition result of the component recognizer with the mounting component data of each component mounting board, the mounting component data of each component mounting board being stored in the board library; and
a containing substance decision unit configured to decide the kind and the content of the specified substance contained in the object board by acquiring the mounting component data of the corresponding component mounting board from the board library based on a recognition result of the board recognizer.

10. [Amended] An electronic device analysis device comprising:
a storage device in which a board library and a component library are stored, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component;
an imaging unit configured to acquire image data by photographing an object board that is of the component mounting board for an analysis object;
a pre-sensing unit configured to acquire second image data of the object board by measuring the object board in a manner simpler than that of the imaging unit;
a board recognizer configured to specify a kind of the object board by comparing a characteristic of the second image data of the object board with the board characteristic data of each component mounting board, the sensing data of the object board being acquired with the pre-sensing unit, the board characteristic data of each component mounting board being stored in the board library;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and
a containing substance decision unit configured to decide the kind and the content of the specified substance contained in the object board,
wherein, when the board recognizer successfully specifies the kind of the object board, the imaging unit does not photograph the object board, and the component recognizer does not perform the electric component recognition, but the containing substance decision unit decides the kind and the content of the specified substance contained in the object board by acquiring the mounting component data of the corresponding component mounting board from the board library based on a recognition result of the board recognizer, and
when the board recognizer fails to specify the kind of the object board, the imaging unit photographs the object board, the component recognizer performs the electric component recognition, and the containing substance decision unit decides the kind and the content of the specified substance contained in the object board by acquiring the containing substance data of the corresponding mounting component from the component library based on a recognition result of the component recognizer.

11. [Amended] An electronic device analysis device connectable to a system through a network, a board library and a component library being stored in the system, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component, the electronic device analysis device comprising:
an imaging unit configured to acquire image data by photographing an object board that is of the component mounting board for an analysis object;
a board recognizer configured to specify a kind of the object board by comparing a characteristic of the image data of the object board with the board characteristic data of each electronic component, the image data of the object board being acquired with the imaging unit, the board characteristic data of each electronic component being stored in the board library;
a component recognizer configured to compare a characteristic of the image data of the object board with the component characteristic data of each electronic component when the board recognizer fails to recognize the object board, the image data of the object board being acquired with the imaging unit, the component characteristic data of each electronic component being stored in the component library, and specify the kind of the object board by specifying the kind of the electronic component mounted on the object board; and
a containing substance decision unit configured to decide the kind and the content of the specified substance contained in the object board by acquiring the mounting component data of the corresponding component mounting board from the board library based on a recognition result of one of the board recognizer and the component recognizer.

12. [Amended] An electronic device analysis device connectable to a system through a network, a component library and a board library being stored in the system, the component library having a data structure in which component characteristic data expressing a characteristic of an electronic component and containing substance data expressing a kind and a content of a specified substance contained in the electronic component are associated with each other in each kind of the electronic component, the board library having a data structure in which board characteristic data expressing a characteristic of a component mounting board, the electronic component mounted on the component mounting board, and mounting component data expressing a kind and a content of the specified substance contained in the electronic component are associated with one another in each kind of the component mounting board, the electronic device analysis device comprising:
an imaging unit configured to acquire image data by photographing an object board that is of the component mounting board for an analysis object;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library;
a board recognizer configured to specify a kind of the object board by comparing a recognition result of the component recognizer with the mounting component data of each component mounting board, the mounting component data of each component mounting board being stored in the board library; and
a containing substance decision unit configured to decide the kind and the content of the specified substance contained in the object board by acquiring the mounting component data of the corresponding component mounting board from the board library based on a recognition result of the board recognizer.

13. [Amended] An electronic device analysis device connectable to a system through a network, a board library and a component library being stored in the system, the board library having a data structure in which board characteristic data expressing a characteristic of a component mounting board, an electronic component mounted on the component mounting board, and mounting component data expressing a kind and a content of a specified substance contained in the electronic component are associated with one another in each kind of the component mounting board, the component library having a data structure in which component characteristic data expressing a characteristic of the electronic component and containing substance data expressing a kind and a content of the specified substance contained in the electronic component are associated with each other in each kind of the electronic component, the electronic device analysis device comprising:
an imaging unit configured to acquire image data by photographing an object board that is of the component mounting board for an analysis object;
a pre-sensing unit configured to acquire sensing data of the object board by measuring the object board in a manner simpler than that of the imaging unit;
a board recognizer configured to specify a kind of the object board by comparing a characteristic of the sensing data of the object board with the board characteristic data of each component mounting board, the sensing data of the object board being acquired with the pre-sensing unit, the board characteristic data of each component mounting board being stored in the board library;
a component recognizer configured to specify a kind of the electronic component mounted on the object board by comparing a characteristic of the image data of the object board with the component characteristic data of each electronic component, the image data of the object board being acquired with the imaging unit, the component characteristic data of each electronic component being stored in the component library; and
a containing substance decision unit configured to decide the kind and the content of the specified substance contained in the object board,
wherein, when the board recognizer successfully specifies the kind of the object board, the imaging unit does not photograph the object board, and the component recognizer does not perform the electric component recognition, but the containing substance decision unit decides the kind and the content of the specified substance contained in the object board by acquiring the mounting component data of the corresponding component mounting board from the board library based on a recognition result of the board recognizer, and
when the board recognizer fails to specify the kind of the object board, the imaging unit photographs the object board, the component recognizer performs the electric component recognition, and the containing substance decision unit decides the kind and the content of the specified substance contained in the object board by acquiring the containing substance data of the corresponding mounting component from the component library based on a recognition result of the component recognizer.

14. [Amended] The electronic device analysis device according to any one of claims 8 to 13, wherein the imaging unit is an X-ray imaging apparatus that acquires an X-ray image of the object board.

15. [Amended] The electronic device analysis device according to any one of claims 8 to 14, wherein the containing substance decision unit outputs data including information about the kind and the content of the specified substance contained in the object board and position information about the component on the board, the component containing the specified substance.

16. [Amended] The electronic device analysis device according to claim 15, further comprising a specified substance extraction method decision unit configured to produce data in which a method for extracting the specified substance from the object board is defined based on the data including the information about the kind and the content of the specified substance contained in the object board and the position information about the component on the board, the component containing the specified substance, the data being output from the containing substance decision unit.

17. [Amended] The electronic device analysis device according to any one of claims 8 to 16, further comprising a specified substance extraction method decision unit configured to acquire extraction method definition data for the component mounting board based on the recognition result of the board recognizer from a specified substance information library having a data structure in which the extraction method definition data is associated in each kind of the component mounting board, a method for extracting the specified substance from the component mounting board being defined in extraction method definition data.

18. [Deleted]

19. [Deleted]

20. [Deleted]

21. [Deleted]

22. [Deleted]

23. [Deleted]

24. [Deleted]
